(19) Europäisches Patentamt
European Patent Office
Office européen des brevets

(11) EP 2 894 702 A1

(12) EUROPEAN PATENT APPLICATION
published in accordance with Art. 153(4) EPC

(43) Date of publication:
15.07.2015 Bulletin 2015/29

(51) Int Cl.:
*H01M 4/587* (2010.01)   *C01B 31/02* (2006.01)
*H01M 4/62* (2006.01)    *H01M 10/0525* (2010.01)
*H01M 10/0567* (2010.01)

(21) Application number: 13835914.6

(22) Date of filing: 30.08.2013

(86) International application number:
PCT/JP2013/073425

(87) International publication number:
WO 2014/038491 (13.03.2014 Gazette 2014/11)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 06.09.2012  JP 2012196561
06.09.2012  JP 2012196562
06.09.2012  JP 2012196564
06.09.2012  JP 2012196565
06.09.2012  JP 2012196567
06.09.2012  JP 2012196571

(71) Applicants:
• Kureha Corporation
  Tokyo 103-8552 (JP)
• Kureha Battery Materials Japan Co. Ltd.
  Tokyo 103-8552 (JP)

(72) Inventors:
• KOMATSU, Mayu
  Tokyo 103-8552 (JP)
• EBIHARA, Yasushi
  Tokyo 103-8552 (JP)

• WAKAHOI, Takashi
  Tokyo 103-8552 (JP)
• TADA, Yasuhiro
  Tokyo 103-8552 (JP)
• SONOBE, Naohiro
  Tokyo 103-8552 (JP)
• SUZUKI, Mao
  Tokyo 103-8552 (JP)
• OKADA, Kayoko
  Tokyo 103-8552 (JP)
• HATAMOCHI, Akitoshi
  Tokyo 103-8552 (JP)
• IMAJI, Makoto
  Tokyo 103-8552 (JP)
• IKEYAMA, Yasufumi
  Tokyo 103-8552 (JP)
• KOBAYASHI, Shota
  Tokyo 103-8552 (JP)

(74) Representative: Hoffmann Eitle
Patent- und Rechtsanwälte PartmbB
Arabellastraße 30
81925 München (DE)

(54) **CARBONACEOUS MATERIAL FOR NEGATIVE ELECTRODES OF NONAQUEOUS ELECTROLYTE SECONDARY BATTERIES, AND METHOD FOR PRODUCING SAME**

(57) The object of the present invention is to provide a carbonaceous material for an anode of a nonaqueous electrolyte secondary battery which uses a plant-derived organic material as a raw material, has high purity so that alkali metals such as the potassium element and alkali earth metals such as the calcium element are sufficiently removed by de-mineral treatment, and has excellent discharge capacity and efficiency, a novel manufacturing method capable of efficiently mass-producing the carbonaceous material, and a lithium ion secondary battery using the carbonaceous material.

The problem described above can be solved by a carbonaceous material for an anode of a nonaqueous electrolyte secondary battery obtained by carbonizing a plant-derived organic material, the atom ratio (H/C) of hydrogen atoms and carbon atoms according to elemental analysis being at most 0.1, the average particle size $Dv_{50}$ being from 2 to 50 $\mu$m, the average interlayer spacing of the 002 planes determined by powder X-ray diffraction being from 0.365 nm to 0.400 nm, the potassium element content being at most 0.5 mass%, and the calcium element content being at most 0.02 mass%.

**Description**

TECHNICAL FIELD

The present invention relates to a carbonaceous material for an anode of a nonaqueous electrolyte secondary battery and a manufacturing method thereof.

BACKGROUND ART

In recent years, the notion of mounting large lithium ion secondary batteries, having high energy density and excellent output characteristics, in electric automobiles has been investigated in response to increasing concern over environmental issues. In small mobile device applications such as mobile telephones or notebook-size personal computers, the capacity per unit volume is important, so graphitic materials with a large density have primarily been used as anode active materials. However, lithium ion secondary batteries for automobiles are difficult to replace during use due to their large size and high cost. Therefore, durability is required to be the same level as that of an automobile, and there is a demand for the realization of a life span of at least 10 years (high durability). When graphitic materials or carbonaceous materials with a developed graphite structure are used, there is a tendency for damage to occur due to crystal expansion and contraction caused by repeated lithium doping and dedoping, which diminishes the charging and discharging repetition performance. Therefore, such materials are not suitable as anode materials for lithium ion secondary batteries for automobiles which require high cycle durability. In contrast, non-graphitizable carbon is suitable for use in automobile applications from the perspective of involving little particle expansion and contraction due to lithium doping and dedoping and having high cycle durability (Patent Document 1).

Conventionally, pitches, polymer compounds, plant-based organic materials, and the like have been studied as carbon sources for non-graphitizable carbon. There are petroleum-based pitches and coal-based pitches, and since they contain a large amount of metal impurities, it becomes necessary to remove the impurities at the time of use. One substance that falls under the category of a petroleum-based pitch is bottom oil refined from naphtha or the like in the process of manufacturing ethylene. Bottom oil is a high-quality carbon source due to its small amounts of impurities, but there are large amounts of light components, and there is also the problem that the yield is low. These pitches have the property that they produce graphitizable carbon (such as coke) in response to heat treatment, and crosslinking treatment is essential to manufacture non-graphitizable carbon. Many steps thus become necessary in order to prepare non-graphitizable carbon from pitches.

Non-graphitizable carbon can be obtained by heat-treating a polymer material, in particular a thermosetting resin such as a phenol resin or a furan resin. However, many steps are required to obtain non-graphitizable carbon beginning with the synthesis of a monomer polymerization and carbonization. This increases the manufacturing cost and leads to many problems in a production method for an anode material for large batteries, which need to be manufactured inexpensively in large quantities.

In contrast, the present inventors discovered that carbon sources from an organic material derived from plants is promising as anode materials since it can be doped with large amounts of active substances. Further, when a plant-derived organic material is used as a carbon source for a carbonaceous material for an anode, the mineral content such as the potassium element and the calcium element present in the organic material source cause an undesirable effect on the doping and dedoping characteristics of the carbonaceous material used as an anode, so a method of reducing the content of the potassium element by performing de-mineral treatment on a plant-derived organic material by means of acid washing (called liquid phase de-mineral treatment hereafter) has been proposed (Patent Documents 2 and 3).

In Patent Document 3, it is disclosed that in liquid phase de-mineral treatment, when the particle size of the substance to be treated at the time of de-mineral treatment is large, the de-mineral treatment efficiency drops dramatically, so the particle size of the carbonaceous material is preferably at most 100 $\mu$m. In the working examples of Patent Document 3, a carbonaceous material precursor that the particle size is 25 $\mu$m is actually used. However, in liquid phase de-mineral treatment, it is necessary to remove the solution in which the mineral content is eluted by means of filtration. Therefore, when the average particle size of the filtered particles is small, it takes a long time for the washing water to permeate into the filling layer of the carbon precursor at the time of filtration, so it was extremely difficult to remove the solution efficiently in a short amount of time. Even if the solution could be removed, the cost becomes high, and it has been difficult to put of the manufacture of a carbonaceous material for an anode of a nonaqueous electrolyte secondary battery with an average particle size of less than 20 $\mu$m using liquid phase de-mineral treatment into practical application on an industrial level has been difficult.

On the other hand, de-mineral treatment with warm water using waste coffee beans that have not been heat-treated at 300°C or higher is disclosed in Patent Document 4. In this method using a raw material with no history of heat treatment at a high temperature, the potassium content can be reduced to at most 0.1 mass% even when using a raw material with a particle size of 1 mm or greater, and the filtering properties are also improved. However, the calcium element cannot be sufficiently removed even with this method.

CITATION LIST

Patent Documents

Patent Document 1: Japanese Unexamined Patent Application Publication No. H08-064207A
Patent Document 2: Japanese Unexamined Patent Application Publication No. H09-161801A
Patent Document 3: Japanese Unexamined Patent Application Publication No. H10-21919A
Patent Document 4: Japanese Unexamined Patent Application Publication No. 2000-268823A
Patent Document 5: Japanese Unexamined Patent Application Publication No. 2001-223030A
Patent Document 6: Japanese Unexamined Patent Application Publication No. 2005-317469A
Patent Document 7: Japanese Unexamined Patent Application Publication No. 2007-134286A

SUMMARY OF INVENTION

Technical Problem

In the de-mineral treatment process described in Patent Document 3 above, even if alkali metals such as potassium can be removed, it is difficult to remove alkali earth metals such as calcium. In particular, this method is insufficient from the perspective of reliability as an anode material for a lithium ion secondary battery for automobiles, which require the realization of a life span of at least 10 years (high durability). Therefore, the development of highly pure non-graphitizable carbon with low impurity levels and a method for inexpensively producing this material in large quantities are highly anticipated.

A first object of the present invention is to provide a carbonaceous material for an anode of a nonaqueous electrolyte secondary battery which uses a plant-derived organic material as a raw material, has high purity so that alkali metals such as the potassium element and alkali earth metals such as the calcium element are sufficiently removed by de-mineral treatment, and has excellent discharge capacity and efficiency, a novel production method capable of efficiently mass-producing the carbonaceous material, and a lithium ion secondary battery using the carbonaceous material. In addition, a second object of the present invention is to provide a carbonaceous material for an anode of a nonaqueous electrolyte secondary battery from which alkali metals such as the potassium element and alkali earth metals such as the calcium element are sufficiently removed by de-mineral treatment and which contains the phosphorus element or the sulfur element in specific quantities, and a novel production method capable of efficiently mass-producing the carbonaceous material.

Further, an anode material using a plant-derived organic material as a carbon source is suitable for automobile applications from the perspective of durability or safety. However, among automobile applications, in the case of a hybrid electric vehicle (HEV), there is a demand for high input/output characteristics for repeating the supply and receipt of a large current in a short amount of time when in a decelerating or light-load running mode or at the time of regeneration by braking, and there is a demand to further reduce the resistance of the anode or the irreversible capacity of the battery. However, raw materials of plant origin construct a honeycomb structure due to their plant origin when simply heat-treated. Therefore, the particle structure becomes curved or laminar when crushed, and when used as an anode of a battery, the contact between particles becomes poor, which leads to the problem that sufficient output characteristics cannot be achieved in comparison with conventional amorphous carbon.

Accordingly, a third object of the present invention is to provide a carbonaceous material for an anode of a nonaqueous electrolyte secondary battery having low resistance, a small irreversible capacity, and high quality, and a nonaqueous electrolyte secondary battery using the same.

In addition, it is known that when moisture is mixed into a lithium ion secondary battery, the moisture reacts with and degrades the nonaqueous electrolyte inside the battery. As a result, the initial irreversible capacity of the battery increases, or the charge-discharge cycle characteristics are diminished. Therefore, a nonaqueous lithium ion secondary battery is ordinarily completely shielded from the outside by a sealed structure.

In addition, it has also been proposed to improve the charge-discharge cycle characteristics by reducing the moisture contained in a lithium ion secondary battery (Patent Document 5). On the other hand, the water is also moisture discharged from the electrode plate filled in the battery. An electrode plate is ordinarily manufactured in a strict environment, but in a battery with a large capacity formed by winding or laminating an electrode plate formed by coating an electrode active material on a current collector, the moisture adsorbed by the electrode active material or the like is not completely removed in an ordinary drying step.

An electrode active material is typically coated on the current collector using a binder and formed into a prescribed shape such as a tape-like shape, but at the time of this forming, the active material is used after being formed into a slurry or a paste using an organic solvent or water. If drying is insufficient at the time of forming, the moisture will remain in the electrode plate. In addition, when preparing a slurry or the like, there is a very high likelihood that the moisture will be adsorbed by the active material when an insufficiently dried active material is used or when moisture management is not thorough, resulting in a situation in which the water concentration of the organic solvent used in the preparation of the slurry or the like is not managed.

Further, when the atmosphere for forming the slurry or the like or the storage conditions after forming are inappropriate, there is also a risk that the moisture will be adsorbed by the electrode active material from the outside. The trace amounts of water adsorbed by such an electrode active material are difficult to completely remove by drying in the battery assembly stage.

The non-graphitizable carbon described above has more pores than graphitizable carbon or the like and therefore has the problem that it tends to absorb water. Accordingly, there is a possibility that the charge-discharge cycle characteristics of the secondary battery may be diminished by water absorption.

Therefore, a fourth object of the present invention is to provide an anode for a nonaqueous electrolyte secondary battery with high durability that yields excellent cycle characteristics and excellent results in exposure tests by using a non-graphitizable carbon material containing a plant-derived organic material as a raw material.

In addition, the average interlayer spacing $d_{002}$ of the plant-derived carbonaceous material for an anode described above is shorter than that of a typical non-graphitizable carbon, and crystal expansion and contraction associated with lithium doping and dedoping is substantial, so it became clear that such a material has a problem of low cycle characteristics at high temperatures, in particular.

Accordingly, a fifth object of the present invention is to provide a carbonaceous material and a battery using a plant-derived organic material as a raw material so that metal impurities are reduced and the high-temperature cycle characteristics are improved. Another object is to provide a vehicle such as an electric automobile that requires little maintenance by applying such a nonaqueous electrolyte secondary battery.

SOLUTION TO PROBLEM

As a result of conducting extensive research on de-mineral treatment methods that can be used industrially-applied in a manufacturing method for a plant-derived carbonaceous material for an anode, present inventors discovered that by performing de-mineral treatment on a plant-derived organic material with an average particle size of at least 100 $\mu$m in an acidic solution with a pH level of 3.0 or lower prior to detarring, potassium and calcium can be removed, and a plant-derived carbonaceous material for an anode can be industrially manufactured in large quantities. The present inventors thus completed the present invention. In addition, the resulting carbonaceous material contained the specific quantities of the phosphorus element or the sulfur element.

Further, the present inventors discovered that by performing de-mineral treatment within a specific temperature range in an acidic solution with a pH level of 3.0 or lower at a temperature of at least 0°C and less than 80°C prior to detarring, it is possible to remove potassium and calcium and to control the ratio ($\rho_H/\rho_{Bt}$) of the true density ($\rho_{Bt}$) determined by a pycnometer method using butanol and the true density ($\rho_H$) determined by a dry density measurement using helium to within a prescribed range, and that it is thus possible to manufacture a high-performance lithium ion secondary battery using a plant-derived carbonaceous material for an anode.

Further, the present inventors discovered that an anode using a carbonaceous material having an average particle size $Dv_{50}$ of from 1 to 8 $\mu$m (in particular, 2 to 8 $\mu$m) and having a specific structure yields high purity and low resistance and makes it possible to reduce the irreversible capacity of the battery. An attempt to reduce the average particle size to 8 $\mu$m or lower so as to reduce curved and laminar particles and to form an anode material with excellent output characteristics has been disclosed in Patent Documents 6 and 7. However, in the plant-derived non-graphitizable carbon described in Patent Documents 6 and 7, potassium, which is an alkali metal, is not removed, and the material is insufficient from the perspective of reliability as an anode material for a lithium ion secondary battery for automobiles, which require the realization of a life span of at least 10 years (high durability). On the other hand, when an attempt is made to remove potassium, the structure or characteristics of the resulting carbonaceous material differ due to the de-mineral treatment step, so it is unclear whether excellent output characteristics can be maintained when the potassium content is low.

Further, the present inventors discovered that a carbonaceous material which is obtained by performing de-mineral treatment on a plant-derived organic material prior to detarring and which has a potassium content, an average interlayer spacing, and atom ratio of hydrogen atoms and carbon atoms determined by elemental analysis within specific ranges, respectively, has low moisture absorption in spite of being a non-graphitizable carbon and that a water-soluble polymer can be used as a binder. The present inventors also discovered that a nonaqueous electrolyte secondary battery with excellent exposure test results and excellent cycle characteristics can be manufactured by using a water-soluble polymer as a binder.

A water-soluble polymer is often used as a binder for forming a graphite electrode. This water-soluble electrode is known to improve the cycle characteristics of a secondary battery using graphite as an electrode. However, a water-soluble polymer has high moisture absorption, and combining such a polymer with highly absorbent non-graphitizable carbon is difficult since it diminishes the results of exposure tests of the secondary battery. In the present invention, it is remarkable that it was possible to manufacture an anode containing a plant-derived carbonaceous material having specific characteristics and a water-soluble polymer.

Further, the present inventors discovered that a nonaqueous electrolyte secondary battery having excellent high-temperature cycle characteristics can be manufactured by using a carbonaceous material having specific characteristic values and adding specific substances (additives) to the electrolyte.

Consequently, the present invention relates to:

[1] a carbonaceous material for an anode of a nonaqueous electrolyte secondary battery obtained by carbonizing a plant-derived organic material, the atom ratio (H/C) of hydrogen atoms and carbon atoms according to elemental analysis being at most 0.1, the average particle size $Dv_{50}$ being at least 2 $\mu$m and at most 50 $\mu$m, the average interlayer spacing of the 002 planes determined by powder X-ray diffraction being at least 0.365 nm and at most 0.400 nm, the potassium element content being at most 0.5 mass%, and the calcium element content being at most 0.02 mass%;

[2] the carbonaceous material for an anode of a nonaqueous electrolyte secondary battery according to [1], wherein the ratio ($\rho_H/\rho_{Bt}$) of the true density ($\rho_{Bt}$) determined by a pycnometer method using butanol and the true density ($\rho_H$) determined by dry density measurement using helium is at least 1.18 and at most 1.38;

[3] the carbonaceous material for an anode of a nonaqueous electrolyte secondary battery according to [1] or [2], wherein the average particle size $Dv_{50}$ is at least 2 $\mu$m and at most 8 $\mu$m;

[4] the carbonaceous material for an anode of a nonaqueous electrolyte secondary battery according to any one of [1] to [3], wherein the true density determined by a pycnometer method using butanol is at least 1.51 g/cm$^3$;

[5] the carbonaceous material for an anode of a nonaqueous electrolyte secondary battery according to any one of [1] to [4], wherein the magnesium element content is at most 0.01 mass%;

[6] the carbonaceous material for an anode of a nonaqueous electrolyte secondary battery according to any one of [1] to [5], wherein the silicon element content is at most 0.02 mass%;

[7] the carbonaceous material for an anode of a nonaqueous electrolyte secondary battery according to any one of [1] to [6], wherein the specific surface area is at most 13 m$^2$/g;

[8] the carbonaceous material for an anode of a nonaqueous electrolyte secondary battery according to any one of [1] to [7], wherein the plant-derived organic material contains a coffee bean-derived organic material;

[9] a manufacturing method for an intermediate for manufacturing a carbonaceous material for an anode of a nonaqueous electrolyte secondary battery, the method comprising: a step of de-mineral treating a plant-derived organic material with an average particle size of at least 100 $\mu$m using an acidic solution with a pH level of 3.0 or lower; and a step of detarring the de-mineraled organic material at a temperature of at least 300°C and at most 1000°C;

[10] the manufacturing method for an intermediate for manufacturing a carbonaceous material for an anode of a nonaqueous electrolyte secondary battery according to [9], wherein the de-mineral treatment step is performed at a temperature of at least 0°C and at most 80°C;

[11] the manufacturing method for an intermediate for manufacturing a carbonaceous material for an anode of a nonaqueous electrolyte secondary battery according to [9] or [10], wherein the detarring step is performed under a combustible gas environment at a temperature of at least 300°C and at most 800°C;

[12] the manufacturing method for an intermediate for manufacturing a carbonaceous material for an anode of a nonaqueous electrolyte secondary battery according to any one of [9] to [11], wherein the plant-derived organic material is not subjected to heat treatment at a temperature of 500°C or higher;

[13] the manufacturing method for an intermediate for manufacturing a carbonaceous material for an anode of a nonaqueous electrolyte secondary battery according to any one of [9] to [12], wherein the plant-derived organic material contains a coffee bean-derived organic material;

[14] the manufacturing method for an intermediate for manufacturing a carbonaceous material for an anode of a nonaqueous electrolyte secondary battery according to any one of [9] to [13], further comprising a step of crushing the de-mineraled organic material;

[15] an intermediate obtained by the method described in any one of [9] to [14];

[16] a manufacturing method for a carbonaceous material for an anode of a nonaqueous electrolyte secondary battery, the method comprising: a step of heat treating the intermediate manufactured by the method described in any one of [9] to [13] at a temperature of at least 1000°C and at most 1500°C; and a step of crushing the intermediate or the heat-treated product thereof;

[17] a manufacturing method for a carbonaceous material for an anode of a nonaqueous electrolyte secondary battery, the method comprising a step of heat treating the intermediate manufactured by the method described in [14] at a temperature of at least 1000°C and at most 1500°C;

[18] a carbonaceous material for an anode of a nonaqueous electrolyte secondary battery obtained by the manufacturing method described in [16] or [17];

[19] an anode for a nonaqueous electrolyte secondary battery containing the carbonaceous material for an anode of a nonaqueous electrolyte secondary battery described in any one of [1] to [8] and [18];

[20] the anode for a nonaqueous electrolyte secondary battery according to [19] containing a water-soluble polymer;

[21] the anode for a nonaqueous electrolyte secondary battery according to [20], wherein the water-soluble polymer is a polymer containing conjugated diene or an acrylic acid ester as a constituent unit;

[22] the anode for a nonaqueous electrolyte secondary battery according to [20] or [21], wherein the water-soluble polymer is at least one type selected from carboxymethylcellulose derivatives, polyvinyl alcohol derivatives, and polyacrylic acid salts;

[23] the anode for a nonaqueous electrolyte secondary battery according to any one of [20] to [22], wherein the mass average molecular weight of the water-soluble polymer is at least 10,000 and at most 6,000,000;

[24] a nonaqueous electrolyte secondary battery comprising the anode for a nonaqueous electrolyte secondary battery of any one of [19] to [23];

[25] the nonaqueous electrolyte secondary battery according to [24] containing an additive having a LUMO value within a range of from at least -1.10 eV to at most 1.11 eV, the LUMO value being calculated using an AM1 (Austin Model 1) calculation method of a semiemperical molecular orbital method;

[26] the nonaqueous electrolyte secondary battery according to [25], wherein the additive is one or more additives selected from the group consisting of fluoroethylene carbonate, trimethylsilyl phosphoric acid, lithium tetrafluoroborate, chloroethylene carbonate, propanesultone, ethylene sulfite, vinylene carbonate, vinyl ethylene carbonate, dioxathiolane dioxide, and lithium bis(oxalato)borate; and

[27] a vehicle in which the nonaqueous electrolyte secondary battery described in any one of [24] to [26] is mounted.

Further, the present invention relates to:

[28] the carbonaceous material for an anode of a nonaqueous electrolyte secondary battery according to any one of [1] to [8], wherein the halogen content is at least 50 ppm and at most 10,000 ppm;

[29] the carbonaceous material for an anode of a nonaqueous electrolyte secondary battery according to any one of [1] to [8], wherein the average particle size $Dv_{50}$ is at least 2 $\mu$m and at most 50 $\mu$m;

[30] the carbonaceous material for an anode of a nonaqueous electrolyte secondary battery according to any one of [3] to [8], wherein the average particle size $Dv_{50}$ is at least 2 $\mu$m and at most 8 $\mu$m, and the proportion of particles of 1 $\mu$m or smaller is at most 10%;

[31] the manufacturing method for an intermediate for manufacturing a carbonaceous material for an anode of a nonaqueous electrolyte secondary battery according to any one of [9] to [14], wherein detarring is performed in an oxygen-containing atmosphere;

[32] an intermediate obtained by the method described in any one of [14] to [31];

[33] a manufacturing method for a carbonaceous material for an anode of a nonaqueous electrolyte secondary battery, the method comprising: a step of heat treating the un-crushed intermediate manufactured by the method described in [31] at a temperature of at least 1000°C and at most 1500°C; and a step of crushing the intermediate or the heat-treated product thereof;

[34] a manufacturing method for a carbonaceous material for an anode of a nonaqueous electrolyte secondary battery, the method comprising a step of heat treating the un-crushed intermediate manufactured by the method described in [31] at a temperature of at least 1000°C and at most 1500°C;

[35] the manufacturing method for a carbonaceous material for an anode of a nonaqueous electrolyte secondary battery according to any one of [16], [17], [33], and [34], wherein heat treatment is performed under an inert gas containing a halogen gas atmosphere;

[36] a carbonaceous material for an anode of a nonaqueous electrolyte secondary battery obtained by the manufacturing method described in anyone of [16], [17], and [33] to [35];

[37] an anode for a nonaqueous electrolyte secondary battery containing the carbonaceous material for an anode of a nonaqueous electrolyte secondary battery described in any one of [1] to [7] and [36];

[38] the anode for a nonaqueous electrolyte secondary battery according to [37] containing a water-soluble polymer;

[39] the anode for a nonaqueous electrolyte secondary battery according to [38], wherein the water-soluble polymer is a polymer containing conjugated diene or an acrylic acid ester as a constituent unit;

[40] the anode for a nonaqueous electrolyte secondary battery according to [38] or [39], wherein the water-soluble polymer is at least one type selected from carboxymethylcellulose derivatives, polyvinylalcohol derivatives, and polyacrylic acid salts;

[41] the anode for a nonaqueous electrolyte secondary battery according to any one of [38] to

[40], wherein the mass average molecular weight of the water-soluble polymer is at least 10,000 and at most 6,000,000;

[42] the anode for a nonaqueous electrolyte secondary battery according to any one of [19] to [23] and [38] to [41] manufactured under a press force of from 2.0 to 5.0 tf/cm$^2$;

[43] a nonaqueous electrolyte secondary battery comprising the anode for a nonaqueous electrolyte secondary battery described in any one of [37] to [42];

[44] the nonaqueous electrolyte secondary battery according to [43] containing an additive having a LUMO value within a range of from at least -1.10 eV to at most 1.11 eV, the LUMO value being calculated using an AM1 (Austin Model 1) calculation method of a semiemperical molecular orbital method;

[45] the nonaqueous electrolyte secondary battery according to [44], wherein the additive is one or more additives selected from the group consisting of fluoroethylene carbonate, trimethylsilyl phosphoric acid, lithium tetrafluoroborate, chloroethylene carbonate, propanesultone, ethylene sulfite, vinylene carbonate, vinyl ethylene carbonate, dioxathiolane dioxide, and lithium bis(oxalato)borate; and

[46] a vehicle in which the nonaqueous electrolyte secondary battery described in any one of [43] to [45] is mounted.

ADVANTAGEOUS EFFECTS OF INVENTION

With the manufacturing method for a carbonaceous material for an anode of a nonaqueous electrolyte secondary battery according to the present invention, it is possible to industrially, and in large quantities, obtain a plant-derived carbonaceous material for an anode having excellent electrical characteristics as a carbonaceous material for an anode. Specifically, it is possible to efficiently obtain a plant-derived carbonaceous material for an anode from which the potassium element and the calcium element have been removed.

When metal compounds of potassium, calcium, or the like are present in carbon, there is a possibility that minute short circuits may occur and cause the temperature of the battery to increase in the of case the metal being reprecipitated after being eluted in the electrolyte. The carbonaceous material obtained by liquid phase de-mineral treatment using an acid in accordance with the present invention has very low levels of these impurities, so a product with high safety when used as a battery can be obtained.

In particular, a carbonaceous material obtained by liquid phase de-mineral treatment at a temperature of at least 0°C and at most 80°C not only has very low levels of these impurities, and the true density is also an appropriate value, so the discharge capacity and/or efficiency of the battery can be improved when the material is used as a battery. Specifically, a carbonaceous material having a ratio ($\rho_H/\rho_{Bt}$) from 1.18 to 1.38 of the true density ($\rho_{Bt}$) determined by a pycnometer method using butanol and the true density ($\rho_H$) determined by dry density measurement using helium demonstrates excellent discharge capacity and efficiency.

Further, with a high-purity carbonaceous material for an anode of a nonaqueous electrolyte secondary battery having a specific structure in which the average particle size $Dv_{50}$ of the carbonaceous material for an anode of a nonaqueous electrolyte secondary battery of the present invention is from 1 to 8 $\mu$m (in particular, from 2 to 8 $\mu$m), the resistance of an electrode using the material is low, and the irreversible capacity of the battery can be reduced, so the material is useful for a hybrid electric vehicle (HEV) which simultaneously requires durability and high input/output characteristics.

Further, with the carbonaceous material for an anode of a nonaqueous electrolyte secondary battery of the present invention (in particular, a coffee bean-derived carbonaceous material for an anode of a nonaqueous electrolyte secondary battery), the water absorbability of the electrode can be suppressed even when the anode is formed together with a water-soluble polymer. Therefore, it is possible to achieve good results in exposure tests while being a nonaqueous electrolyte secondary battery having an anode formed from a non-graphitizable carbonaceous material and a water-soluble polymer. As a result, it is possible to provide a nonaqueous electrolyte secondary battery having both excellent exposure test results and excellent durability.

Further, with an electrolyte containing an additive with a LUMO value from -1.10 to 1.11 eV, it is possible to provide a nonaqueous electrolyte secondary battery with excellent high-temperature cycle characteristics when a carbonaceous material containing a plant-derived organic material is used as an anode. In addition, it becomes possible to provide a vehicle such as an electric automobile that requires little maintenance by applying such a nonaqueous electrolyte secondary battery.

DESCRIPTION OF EMBODIMENTS

Embodiments of the present invention will be described hereafter.

[1] Carbonaceous material for an anode of a nonaqueous electrolyte secondary battery

The carbonaceous material for an anode of a nonaqueous electrolyte secondary battery according to the present invention (also simply called the carbonaceous material hereafter) is a carbonaceous material obtained by carbonizing a plant-derived organic material, the atom ratio (H/C) of hydrogen atoms and carbon atoms according to elemental analysis being at most 0.1, the average particle size $Dv_{50}$ being from 2 to 50 $\mu$m, the average interlayer spacing of the 002 planes determined by X-ray diffraction being from 0.365 to 0.400 nm, the potassium element content being at most 0.5 mass%, and the calcium element content being at most 0.02 mass%. In the carbonaceous material for an anode of a nonaqueous electrolyte secondary battery of the present invention, the ratio ($\rho_H/\rho_{Bt}$) of the true density ($\rho_{Bt}$) determined by a pycnometer method using butanol and the true density ($\rho_H$) determined by dry density measurement using helium is preferably from 1.18 to 1.38. In addition, the carbonaceous material for an anode of a nonaqueous electrolyte secondary battery according to the present invention preferably has an average particle size $Dv_{50}$ from 2 to 8 $\mu$m. Further, the carbonaceous material for an anode of a nonaqueous electrolyte secondary battery according to the present invention is preferably a carbonaceous material containing the phosphorus element in an amount of at least 0.02 mass% and/or the sulfur element in an amount of at least 0.05 mass%.

The carbonaceous material of the present invention uses a plant-derived organic material as a raw material and is therefore a non-graphitizable carbonaceous material. Non-graphitizable carbon involves little particle expansion and contraction due to lithium doping and dedoping and has high cycle durability. Such a plant-derived organic material will be described in detail in the description of the manufacturing method of the present invention.

The average particle size (volume average particle size: $Dv_{50}$) is preferably from 2 to 50 $\mu$m. When the average particle size is less than 2 $\mu$m, the fine powder increase, so the specific surface area increases. The reactivity with an electrolyte solution increases, and the irreversible capacity, which is a capacity that is charged but not discharged, also increases, and the percentage of the cathode capacity that is wasted thus increases. Thus, this is not preferable. In addition, when pore size in anode producing an anode, each gap formed between the carbonaceous materials becomes small, and the movement of lithium in the electrolyte solution is suppressed, which is not preferable. The lower limit of the average particle size is preferably at least 2 $\mu$m, more preferably at least 3 $\mu$m, and particularly preferably at least 4 $\mu$m (specifically, at least 8 $\mu$m). On the other hand, when the average particle size is 50 $\mu$m or lower, there are short free paths of lithium diffusion within particles, which enables rapid charging and discharging. Furthermore, in the case of a lithium ion secondary battery, increasing the electrode area is important for improving the input/output characteristics, so it is necessary to reduce the coating thickness of the active material on the current collector. In order to reduce the coating thickness, it is necessary to reduce the particle size of the active material. From this perspective, the upper limit of the average particle size is preferably at most 50 $\mu$m, more preferably at most 40 $\mu$m, even more preferably at most 30 $\mu$m, yet even more preferably at most 25 $\mu$m, and most preferably at most 20 $\mu$m.

In a special aspect of the present invention, the average particle size (volume average particle size: $Dv_{50}$) of the carbonaceous material may be from 1 to 8 $\mu$m but is preferably from 2 to 8 $\mu$m. When the average particle size is from 1 to 8 $\mu$m, the resistance of the electrode can be kept low, which makes it possible to reduce the irreversible capacity of the battery. In this case, the lower limit of the average particle size is preferably 1 $\mu$m and even more preferably 3 $\mu$m. In addition, when the average particle size is 8 $\mu$m or lower, there are short free paths of lithium dispersion within particles, which enables rapid charging and discharging. Furthermore, in the case of a lithium ion secondary battery, increasing the electrode area is important for improving the input/output characteristics, so it is necessary to reduce the coating thickness of the active material on the current collector at the time of electrode preparation. In order to reduce the coating thickness, it is necessary to reduce the particle size of the active material. From this perspective, the upper limit of the average particle size is preferably at most 8 $\mu$m but is more preferably at most 7 $\mu$m. When the average particle size exceeds 8 $\mu$m, the surface area of the active material increases and the electrode reaction resistance increases, which is not preferable.

(Fine powder removal)

The carbonaceous material of the present invention is preferably a material from which fine powder has been removed. When a carbonaceous material from which fine powder has been removed is used as an anode of a nonaqueous electrolyte secondary battery, the irreversible capacity decreases, and the charge-discharge efficiency improves. In the case of a carbonaceous material with a small amount of fine powder, the active material can be sufficiently adhered with a small amount of a binder. That is, the fine powder of a carbonaceous material containing a large amount of fine powder cannot be sufficiently adhered, so the long-term durability may be inferior.

The amount of fine powder contained in the carbonaceous material of the present invention is not particularly limited, but when the average particle size is from 2 to 50 $\mu$m (preferably a particle size of from 8 to 50 $\mu$m), the proportion of particles 1 $\mu$m or smaller is preferably at most 2 vol.%, more preferably at most 1 vol.%, and even more preferably at most 0.5 vol.%. When a carbonaceous material in which the proportion of particles 1 $\mu$m or smaller is greater than 2 vol.% is used, the irreversible capacity of the resulting battery becomes large, which may result in inferior cycle durability. In addition, when the particle size is from 1 to 8 $\mu$m (preferably a particle size of from 2 to 8 $\mu$m), although not particularly limited, the proportion of particles 1 $\mu$m or smaller is preferably at most 10 vol.%, more preferably at most 8 vol.%, and even more preferably at most 6 vol.%. When a carbonaceous material in which the proportion of particles 1 $\mu$m or smaller is greater than 10 vol.% is used, the irreversible capacity of the resulting battery becomes large, which may result in inferior cycle durability.

In carbonaceous materials with an average particle size of 10 $\mu$m, when comparing the discharge capacity/irreversible capacity of secondary batteries manufactured using a carbonaceous material containing fine powder of 1 $\mu$m or smaller in an amount of 0.0 vol.% (containing practically no fine powder) and a carbonaceous material containing fine powder of 1 $\mu$m or smaller in an amount of 2.8 vol.%, the results are respectively 444/57 (mAh/g) and 454/77 (mAh/g), indicating that the irreversible capacity decreases when the amount of fine powder is smaller.

Accordingly, the present invention relates to a carbonaceous material for an anode of a nonaqueous electrolyte secondary battery obtained by carbonizing a plant-derived organic material, the atom ratio (H/C) of hydrogen atoms and carbon atoms according to elemental analysis being at most 0.1, the average particle size $Dv_{50}$ being from 2 to 50 $\mu$m, the average interlayer spacing of the 002 planes determined by powder X-ray diffraction being from 0.365 nm to 0.400 nm, the potassium element content being at most 0.5 mass%, and the proportion of particles 1 $\mu$m or smaller being at most 2%.

In addition, the present invention relates to a carbonaceous material for an anode of a nonaqueous electrolyte secondary battery obtained by carbonizing a plant-derived organic material, the atom ratio (H/C) of hydrogen atoms and carbon atoms according to elemental analysis being at most 0.1, the average particle size $Dv_{50}$ being from 1 to 8 $\mu$m, the average interlayer spacing of the 002 planes determined by powder X-ray diffraction being from 0.365 nm to 0.400 nm, the potassium element content being at most 0.5 mass%, and the proportion of particles 1 $\mu$m or smaller being at most 10%.

(Elements in the carbonaceous material)

Plant-derived organic materials contain alkali metals (for example, potassium or sodium), alkali earth metals (for example, magnesium or calcium), transition metals (for example, iron or copper), and other elements, and it is also preferable to reduce contents of these metals. When these metals are contained, impurities are eluted in the electrolyte at the time of dedoping from the anode, which is highly likely to have an adverse effect on the battery performance and/or safety.

The potassium element content in the carbonaceous material of the present invention is at most 0.5 mass%, more preferably at most 0.2 mass%, and even more preferably at most 0.1 mass%. In a nonaqueous electrolyte secondary battery using a carbonaceous material for an anode having a potassium content exceeding 0.5 mass%, the dedoping capacity may decrease, and the non-dedoping capacity may increase.

The content of calcium in the carbonaceous material of the present invention is at most 0.02 mass%, more preferably at most 0.01 mass%, and even more preferably at most 0.005 mass%. In a nonaqueous electrolyte secondary battery using a carbonaceous material for an anode having a large calcium content, minute short circuits may cause heat generation. In addition, this may also have an adverse effect on the doping characteristics and dedoping characteristics.

The content of magnesium in the carbonaceous material of the present invention is at most 0.01 mass%, more preferably at most 0.008 mass%, and even more preferably at most 0.005 mass%.

The content of silicon in the carbonaceous material of the present invention is at most 0.02 mass%, more preferably at most 0.015 mass%, and even more preferably at most 0.01 mass%.

In addition, the halogen content contained in the carbonaceous material of the present invention, which is heat-treated by a halogen gas-containing non-oxidizing gas atmosphere described below, is not particularly limited but is from 50 to 10,000 ppm, more preferably from 100 to 5000 ppm, and even more preferably from 200 to 3000 ppm.

Accordingly, the present invention relates to a carbonaceous material for an anode of a nonaqueous electrolyte secondary battery obtained by carbonizing a plant-derived organic material, the atom ratio (H/C) of hydrogen atoms and carbon atoms according to elemental analysis being at most 0.1, the average particle size $Dv_{50}$ being from 2 to 50 $\mu$m, the average interlayer spacing of the 002 planes determined by powder X-ray diffraction being from 0.365 nm to 0.400 nm, the potassium element content being at most 0.5 mass%, and the halogen content being from 50 to 10,000 ppm.

The H/C ratio of the carbonaceous material of the present invention is determined by measuring hydrogen atoms and carbon atoms by elemental analysis. Since the hydrogen content of the carbonaceous material decreases as the degree of carbonization increases, the H/C ratio tends to decrease. Accordingly, the H/C ratio is effective as an index expressing the degree of carbonization. The H/C ratio of the carbonaceous material of the present invention is not particularly limited but is at most 0.1 and more preferably at most 0.08. The H/C ratio is particularly preferably at most 0.05. When the ratio H/C of hydrogen atoms to carbon atoms exceeds 0.1, the amount of functional groups present in the carbonaceous material increases, and the irreversible capacity increases due to a reaction with lithium, which is not preferable.

(Average interlayer spacing of the carbonaceous material)

The average interlayer spacing of the (002) planes of a carbonaceous material indicates a value that decreases as the crystal integrity increases. The spacing of an ideal graphite structure yields a value of 0.3354 nm, and the value tends to increase as the structure is disordered. Accordingly, the average interlayer spacing is effective as an index indicating the carbon structure. The average interlayer spacing of the 002 planes determined by X-ray diffraction for the carbonaceous material for a nonaqueous electrolyte secondary battery according to the present invention is at least 0.365 nm, more preferably at least 0.370 nm, and even more preferably at least 0.375 nm. Similarly, the average interlayer spacing described above is at most 0.400 nm, more preferably at most 0.395 nm, and even more preferably at most 0.390 nm. When the interlayer spacing of the 002 planes is less than 0.365 nm, the doping capacity becomes small when used as an anode of a nonaqueous electrolyte secondary battery, or the expansion and contraction associated with the doping and dedoping of lithium becomes large, causing gaps to form between particles, and the conductive network between the particles is broken, which gives the product poor repeating characteristics and is particularly undesirable for automobile applications. In addition, when the interlayer spacing exceeds 0.400 nm, the non-dedoping capacity becomes large, which is not preferable.

(True density of the carbonaceous material)

The true density of a graphitic material having an ideal structure is 2.2 g/cm$^3$, and the true density tends to decrease as the crystal structure becomes disordered. Accordingly, the true density can be used as an index expressing the carbon structure. The true density of the carbonaceous material of the present invention is not particularly limited, but the lower limit is at least 1.51 g/cm$^3$, preferably at least 1.54 g/cm$^3$, more preferably at least 1.55 g/cm$^3$, and even more preferably at least 1.56 g/cm$^3$. A carbonaceous material having a true density of less than 1.51 g/cm$^3$ may have a large number of closed pores, and the doping and dedoping capacity may be reduced, which is not preferable. Furthermore, the electrode density decreases and thus causes a decrease in the volume energy density, which is not preferable. In addition, the upper limit of the true density is not particularly limited but is at most 1.65 g/cm$^3$, more preferably at most 1.62 g/cm$^3$, and even more preferably at most 1.60 g/cm$^3$. When the true density exceeds 1.65 g/cm$^3$, the crystallinity of the carbonaceous material increases, while the proportion of edge surfaces decreases, and the input/output performance decreases, which is not preferable. When the true density exceeds 1.65 g/cm$^3$, high-temperature cycle characteristics may be inferior when used as a battery.
In a preferred aspect of the carbonaceous material of the present invention, the ratio ($\rho_H/\rho_{Bt}$) of the true density ($\rho_{Bt}$) determined by a pycnometer method using butanol and the true density ($\rho_H$) determined by a dry density measurement using helium is from 1.18 to 1.38. The lower limit of the ratio of the true density in the present invention is at least 1.18 and more preferably at least 1.25. When the value of the ratio is lower than the lower limit, the discharge capacity becomes low. In addition, the upper limit is preferably at most 1.38, more preferably at most 1.32, and even more preferably at most 1.30. When the value of the ratio is greater than the upper limit, the irreversible capacity may become large.

(Specific surface area of the carbonaceous material)

The specific surface area (also called "SSA" hereafter) determined by a BET method of the nitrogen adsorption of the carbonaceous material of the present invention is not particularly limited but is preferably at most 13 m$^2$/g, more preferably at most 12 m$^2$/g, even more preferably at most 10 m$^2$/g, yet even more preferably at most 8 m$^2$/g, and most preferably at most 7.0 m$^2$/g. When a carbonaceous material having an SSA larger than 13 m$^2$/g is used, the irreversible capacity of the resulting battery may become large. In addition, the lower limit of the specific surface area is preferably at least 1 m$^2$/g, more preferably at least 1.5 m$^2$/g, and even more preferably at least 2 m$^2$/g. When a carbonaceous material having an SSA less than 1 m$^2$/g is used, the discharge capacity of the battery may become small. In addition, specific surface area when the average particle size $Dv_{50}$ is from 1 to 8 $\mu$m (in particular, from 2 to 8 $\mu$m) is preferably from 6 to 12 m$^2$/g and more preferably from 8 to 11 m$^2$/g.

[2] Manufacturing method for a carbonaceous material for an anode of a nonaqueous electrolyte secondary battery

The manufacturing method for a carbonaceous material for an anode of a nonaqueous electrolyte secondary battery according to the present invention is a manufacturing method for a carbonaceous material which contains a plant-derived organic material with an average particle size of at least 100 $\mu$m as a raw material and comprises at least: (1) a step of de-mineral treating the material using an acidic substance with a pH level of 3.0 or lower (also called the "liquid phase de-mineral treatment step" hereafter); (2) a step of crushing the de-mineraled organic material or the carbonized product (carbonized product after detarring or carbonized product after final heat treatment) to an average particle size of from 2 to 50 $\mu$m (also called a "crushing step" hereafter); and (4) a step of heat treating the material at a temperature of from 1000 to 1500°C under a non-oxidizing atmosphere (also called a "heat treatment step" hereafter). The manufacturing method for a carbonaceous material for an anode of a nonaqueous electrolyte secondary battery preferably includes a (3) a step of detarring the de-mineraled organic material at a temperature of from 300 to 1000°C (also called a "detarring step" hereafter). Accordingly, the manufacturing method for a carbonaceous material for an anode of a nonaqueous electrolyte secondary battery according to the present invention comprises a liquid phase de-mineral treatment step (1), a crushing step (2), and a heat treatment step (4) and preferably includes a detarring step (3). Further, the liquid phase de-mineral treatment step (1) is preferably a step of treating the plant-derived organic material in an acidic solution with a pH level of 3.0 or lower at a temperature of at least 0°C and at most 80°C.
In addition, a special aspect of the present invention may be a manufacturing method for a carbonaceous material for an anode of a nonaqueous electrolyte secondary battery which contains a plant-derived organic material as a raw material and comprises at least: (1) a step of de-mineral treating the material using an acidic substance with a pH level of 3.0; (2) a step of crushing the de-mineraled organic material or the carbonized product (carbonized product after detarring or carbonized product after final heat treatment) to an average particle size of from 2 to 50 $\mu$m; and (3) a step of heat treating the material at a temperature of from 1000 to 1500°C under a non-oxidizing atmosphere.

(Plant-derived organic material)

In plant-derived organic materials that can be used in the present invention, the plant serving as a raw material is not particularly limited, but examples include coffee beans, coconut shells, tea leaves, sugar cane, fruits (tangerines or bananas), straw, broadleaf trees, coniferous trees, bamboo, and rice husks. These plant-derived organic materials can be used alone or as a combination of two or more types. Of the plant-derived organic materials described above, an extract residue obtained by extracting the coffee drink component from coffee beans is particularly preferable in that some of the mineral content is removed when the coffee component is extracted, and of these, a coffee extract residue that is industrially extracted is moderately crushed and can be obtained in large quantities.

Carbonaceous materials for anodes manufactured from these plant-derived organic materials (in particular, coffee bean extract residues) are useful as an anode material for a nonaqueous electrolyte secondary battery in that they enable the doping of large quantities of active materials. However, plant-derived organic materials contain large amounts of metal elements and, in particular, contain large amounts of potassium and calcium. In addition, a carbonaceous material manufactured from a plant-derived organic material containing large amounts of metal elements cause an undesirable effect on the electrochemical characteristics or safety when used as an anode. Accordingly, the content of the potassium element, calcium element, or the like contained in the carbonaceous material for an anode is preferably kept to a minimum.

The plant-derived organic material used in the present invention is preferably not heat-treated at a temperature of 500°C or higher. When heat-treated at a temperature of 500°C or higher, de-mineral treatment may not be performed sufficiently due to the carbonization of the organic material. The plant-derived organic material used in the present invention is preferably not heat-treated. When heat-treated, the temperature is preferably at most 400°C, more preferably at most 300°C, even more preferably at most 200°C, and most preferably at most 100°C. For example, when a coffee bean extract residue is used as a raw material, heat treatment at around 200°C may be performed due to roasting, but the material can still be adequately used as the plant-derived organic material used in the present invention.

The plant-derived organic material used in the present invention preferably does not have advanced putrefaction. For example, when a coffee extract residue is used, microorganisms may grow as a result of long-term storage in a state containing a large amount of water, and organic materials such as lipids or proteins may be decomposed. In the carbonization process, part of these organic materials undergoes a cyclization reaction to form an aromatic compound with a carbon structure, and when the organic materials are decomposed due to putrefaction, the final carbon structure may differ.
When a coffee extract residue with advanced putrefaction is used, the true density of the resulting carbonaceous material may decrease. When the true density of the carbonaceous material decreases, the irreversible capacity may increase, which is not preferable. In addition, the water absorbability of the carbonaceous material increases, so the degree of deterioration due to atmospheric exposure becomes large.

**EP 2 894 702 A1**

1. Liquid phase de-mineral treatment step

The liquid phase de-mineral treatment step in the manufacturing method of the present invention is a step in which the plant-derived organic material is treated in an acidic solution with a pH level of 3.0 or lower prior to detarring. This liquid phase de-mineral treatment makes it possible to efficiently remove the potassium element, the calcium element, and the like and to more efficiently remove the calcium element than in cases in which an acid is not used, in particular. In addition, alkali metals, alkali earth metals, and transition metals such as copper or nickel can also be removed. In the liquid phase de-mineral treatment step, the plant-derived organic material is preferably treated in an acidic solution with a pH level of 3.0 or lower at a temperature of at least 0°C and at most 80°C. A secondary battery using a carbonaceous material obtained by liquid phase de-mineral treatment at a temperature of at least 0°C and less than 80°C is particularly excellent with regard to discharge capacity and efficiency.

The acid used in liquid phase de-mineral treatment is not particularly limited, but examples include strong acids such as hydrochloric acid, hydrofluoric acid, sulfuric acid, and nitric acid, weak acids such as citric acid and acetic acid, or mixtures thereof, and hydrochloric acid or hydrofluoric acid is preferable.

The plant-derived organic material used in the present invention is preferably not heat-treated at a temperature of 500°C or higher, but when the carbonization of the organic material progresses as a result of being heat-treated at a temperature of 500°C or higher, sufficient de-mineral treatment can be achieved by using hydrofluoric acid. For example, after a coffee extract residue was detarred at 700°C, liquid phase de-mineral treatment was performed for 1 hour using 35% hydrochloric acid, and the material was then washed three times with water and dried. After being crushed to 10 $\mu$m and subjected to final heat treatment at 1250°C, calcium remained at a concentration of 409 ppm, and potassium remained at a concentration of 507 ppm. On the other hand, when a mixed solution of 8.8% hydrochloric acid + 11.5% hydrofluoric acid was used, potassium and calcium were under the detection limit (10 ppm or less) in fluorescent X-ray measurements.

The pH at the time of liquid phase de-mineral treatment is not particularly limited as long as sufficient de-mineral treatment is achieved, but the pH is preferably at most 3.0, more preferably at most 2.5, and even more preferably at most 2.0. When the pH exceeds 3.0, it may not be possible to sufficiently achieve de-mineral treatment, which is problematic.

The liquid phase de-mineral treatment time differs depending on the pH or treatment temperature and is not particularly limited, but the lower limit is preferably 1 minute, more preferably 5 minutes, and even more preferably 10 minutes. The upper limit is preferably 300 minutes, more preferably 200 minutes, and even more preferably 150 minutes. When the time is short, de-mineral treatment can be performed sufficiently, whereas when the time is long, there are problems from the perspective of operational efficiency.

The liquid phase de-mineral treatment temperature is not particularly limited within a wide range from 0°C to 100°C. When the de-mineral treatment temperature is lower than 0°C, the diffusion of the acid becomes slow, and the de-mineral treatment efficiency decreases, which is not preferable. When the temperature is higher than 100°C, acid volatilization or the like occurs, and the implementation equipment is limited, which is not preferable. In addition, the treatment temperature is preferably at least 0°C and at most 80°C, and the upper limit is preferably 80°C, more preferably 70°C, even more preferably 40°C, and yet even more preferably room temperature (20 to 40°C). When the treatment temperature is at most 80°C, the true density of the carbonaceous material becomes high, and the discharge capacity or efficiency of the battery improves when used as a battery. In addition, when the de-mineral treatment temperature is low, it takes a long time to perform sufficient de-mineral treatment, whereas when the de-mineral treatment temperature is high, treatment for a short amount of time is sufficient, but the true density of the carbonaceous material using butanol decreases, which is not preferable.

The liquid phase de-mineral treatment step (1) in the present invention is a step for removing potassium, calcium, and the like contained in the plant-derived organic material. The potassium content after the liquid phase de-mineral treatment step (1) is preferably at most 0.5 mass%, more preferably at most 0.2 mass%, and even more preferably at most 0.1 mass%. In addition, the calcium content is preferably at most 0.02 mass%, more preferably at most 0.01 mass%, and even more preferably at most 0.005 mass%. This is because when the potassium content exceeds 0.5 mass% and the calcium content exceeds 0.02 mass%, not only does the dedoping capacity become small and the non-dedoping capacity become large in a nonaqueous electrolyte secondary battery using the resulting carbonaceous material for an anode, but these metal elements are eluted in the electrolyte, which causes short circuits at the time of reprecipitation and causes substantial safety problems.

The particle size of the plant-derived organic material used in liquid phase de-mineral treatment is not particularly limited. However, when the particle size is too small, the permeability of the solution at the time of filtration after de-mineral treatment decreases, so the lower limit of the particle size is preferably at least 100 $\mu$m, more preferably at least 300 $\mu$m, and even more preferably at least 500 $\mu$m. In addition, the upper limit of the particle size is preferably at most 10,000 $\mu$m, more preferably at most 8000 $\mu$m, and even more preferably at most 5000 $\mu$m.

Further, the plant-derived organic material is preferably crushed to an appropriate average particle size (preferably from 100 to 50,000 $\mu$m, more preferably from 100 to 10,000 $\mu$m, and even more preferably from 100 to 5000 $\mu$m) prior to

12

liquid phase de-mineral treatment. This crushing differs from the crushing step (2) for crushing the material so that the average particle size after heat treatment is from 2 to 50 $\mu$m.

Although the mechanism by which potassium, other alkali metals, alkali earth metals, transition metals, and the like are efficiently removed by liquid phase de-mineral treatment in the manufacturing method of the present invention is not clear, the mechanism is thought to be as follows. When the material undergoes heat treatment at a temperature of 500°C or higher, carbonization progresses, and the material becomes hydrophobic, so the liquid acid does not penetrate to the inside of the organic material. In contrast, if the material has not undergone heat treatment, the material is hydrophilic, and the liquid acid penetrates to the inside of the organic material. As a result, it is thought that metals such as potassium contained in the plant-derived organic material are precipitated as chlorides or the like and removed by washing with water, but the present invention is not limited to the above explanation.

2. Crushing step

The crushing step in the manufacturing method of the present invention is a step for crushing the de-mineraled organic material or the carbonized product (carbonized product after de-mineral treatment or carbonized product after final heat treatment) to an average particle size from 2 to 50 $\mu$m. That is, as a result of the crushing step, the average particle size of the resulting carbonaceous material is adjusted to the range of 2 to 50 $\mu$m. In the crushing step, the material is preferably crushed so that the average particle size after heat treatment is from 1 to 8 $\mu$m and more preferably from 2 to 8 $\mu$m. That is, as a result of the crushing step, the average particle size of the resulting carbonaceous material is adjusted to the range of 1 to 8 $\mu$m and preferably from 2 to 8 $\mu$m.

In this specification, a "carbonaceous material precursor" or an "intermediate" refers to a material after the completion of the detarring step. That is, the "carbonaceous precursor" and the "intermediate" in this specification are used with essentially the same meaning and include materials that have and have not been crushed.

The order of the crushing step is not particularly limited as long as the average particle size of the resulting carbonaceous material is from 2 to 50 $\mu$m, but the step can be performed after the liquid phase de-mineral treatment step (1), after the detarring step (3), and after the heat treatment step (4).

The crusher used for crushing is not particularly limited, and a jet mill, a ball mill, a hammer mill, a rod mill, or the like, for example, can be used, but a jet mill equipped with a classification function is preferable from the perspective that there is minimal fine powder generation. On the other hand, when a ball mill, a hammer mill, a rod mill, or the like is used, fine powder can be removed by performing classification after crushing.

Examples of classification include classification with a sieve, wet classification, and dry classification. An example of a wet classifier is a classifier utilizing a principle such as gravitational classification, inertial classification, hydraulic classification, or centrifugal classification. In addition, an example of a dry classifier is a classifier utilizing a principle such as sedimentation classification, mechanical classification, or centrifugal classification.

In the crushing step, crushing and classification can be performed with a single apparatus. For example, crushing and classification can be performed using a jet mill equipped with a dry classification function. Furthermore, an apparatus with an independent crusher and classifier can also be used. In this case, crushing and classification can be performed continuously, but crushing and classification may also be performed non-continuously.

The crushed carbonaceous precursor may be heat-treated by the heat treatment step. Depending on the heat treatment conditions, contraction of about 0 to 20% may occur, so when the material is crushed prior to heat treatment and the heat treatment step is then performed, the average particle size of the crushed carbonaceous precursor is preferably adjusted to a somewhat large size within the range of about 0 to 20% in order to ultimately obtain a carbonaceous material for a nonaqueous electrolyte secondary battery having an average particle size $Dv_{50}$ from 2 to 50 $\mu$m. The average particle size after crushing is not particularly limited as long as the average particle size of the carbonaceous material that is ultimately obtained is from 2 to 50 $\mu$m, but specifically, the average particle size $Dv_{50}$ is preferably adjusted to 2 to 63 $\mu$m, more preferably from 2 to 50 $\mu$m, even more preferably from 2 to 38 $\mu$m, yet even more preferably from 2 to 32 $\mu$m, and most preferably from 3 to 25 $\mu$m. After heat-treatment, the average particle size of the crushed carbonaceous precursor is preferably adjusted to a somewhat large size within the range of about 0 to 20% in order to obtain a carbonaceous material for a nonaqueous electrolyte secondary battery having an average particle size $Dv_{50}$ from 1 to 8 $\mu$m. The average particle size after crushing is not particularly limited as long as the average particle size of the carbonaceous material that is ultimately obtained is from 2 to 8 $\mu$m, but specifically, the average particle size $Dv_{50}$ of the intermediate of the carbonaceous material for an electrode of a nonaqueous electrolyte secondary battery is preferably ultimately adjusted to 1 to 10 $\mu$m and more preferably from 1 to 9 $\mu$m.

(Fine powder removal)

The carbonaceous material of the present invention is preferably a material from which fine powder has been removed. By removing fine powder, it is possible to increase the long-term durability of the secondary battery. In addition, the irreversible capacity of the secondary battery can be reduced.

The method of removing fine powder is not particularly limited, and fine powder may be removed, for example, in the crushing step using a crusher such as a jet mill equipped with a classification function. On the other hand, when a crusher not having a classification function is used, fine powder can be removed by performing classification after crushing. Further, fine powder can be recovered using a cyclone or a bag filter after crushing or after classification.

3. Detarring step

In the manufacturing method of the present invention, a carbonaceous precursor is formed by performing detarring on the carbon source. In addition, heat treatment for transforming the carbonaceous precursor into a carbonaceous material is called heat treatment. Heat treatment may be performed in a single stage or may be divided into two or more stages at low and high temperatures and performed. In this case, heat treatment performed at a relatively low temperature in comparison to final heat treatment is called pre-heat treatment, and heat treatment performed at the highest attained temperature is called final heat treatment. In this specification, cases in which it is not the main objective to form a carbonaceous precursor by removing volatile content or the like from the carbon source (detarring) or to transform the carbonaceous precursor into a carbonaceous material (heat treatment) are called "non-carbonization heat treatment" and are differentiated from "detarring" and "heat treatment". Non-carbonization heat treatment refers to heat treatment at a temperature less than 500°C, for example. More specifically, the roasting or the like of coffee beans at around 200°C is included in non-carbonization heat treatment. As described above, the plant-derived organic material used in the present invention is preferably not heat-treated at a temperature of 500°C or higher, but the plant-derived organic material used in the present invention may be subjected to non-carbonization heat treatment.

Detarring is performed by calcining the carbon source at a temperature at least 300°C and at most 1000°C. The temperature is more preferably at least 300°C and at most 800°C or at least 400°C and less than 900°C. Detarring removes volatile matter such as $CO_2$, $CO$, $CH_4$, and $H_2$, for example, and the tar content so that the generation of these components can be reduced and the burden of the furnace can be reduced in final heat treatment. When the detarring temperature is less than 300°C, detarring becomes insufficient, and the amount of tar or gas generated in the final heat treatment step after crushing becomes large. This may adhere to the particle surface and cause a decrease in battery performance without being able to maintain the surface properties after crushing, which is not preferable. On the other hand, when the detarring temperature exceeds 1000°C, the final heat treatment temperature is too high, the temperature exceeds the tar-generating temperature range, and the used energy efficiency decreases, which is not preferable. Furthermore, the generated tar causes a secondary decomposition reaction, and the tar adheres to the carbonaceous precursor and causes a decrease in performance, which is not preferable.

Detarring is performed under an inert gas atmosphere, and examples of inert gases include nitrogen, argon, and the like. In addition, detarring can be performed under reduced pressure at a pressure of 10 kPa or less, for example. The detarring time is also not particularly limited, but detarring may be performed for 0.5 to 10 hours, for example, and is more preferably performed for 1 to 5 hours. In addition, the crushing step described above may also be performed after detarring.

When the intermediate (carbonaceous precursor) after the detarring step is crushed, the average particle size $Dv_{50}$ is preferably from 2 to 63 $\mu$m and more preferably from 1 to 10 $\mu$m. By setting the average particle size to this range, it is possible to ensure that the particle size of the carbonaceous material is within the range of the present invention after contraction in the subsequent heat treatment step (pre-heat treatment and final heat treatment). In addition, the content of potassium and calcium in the intermediate is preferably adjusted to at most 0.5 mass% and at most 0.02 mass%, respectively. Within these ranges, the concentration of each ion contained in the carbonaceous material after heat treatment can be set within the numerical ranges of the invention of this application.

(Detarring under an oxygen-containing atmosphere)

In the present invention, detarring can also be performed under an oxygen-containing atmosphere. The oxygen-containing atmosphere is not particularly limited, and air, for example, can be used, but it is preferable for the oxygen content to be low. Accordingly, the oxygen content in the oxygen-containing atmosphere is preferably at most 20 vol.%, more preferably at most 15 vol.%, even more preferably at most 10 vol.%, and most preferably at most 5 vol.%. In addition, the oxygen content may also be at least 1 vol.%, for example.

Accordingly, the present invention relates to a manufacturing method for a carbonaceous material for a nonaqueous electrolyte secondary battery, the method preferably comprising: a liquid phase de-mineral treatment step (1), a crushing step (2), a detarring step (3), and a heat treatment step (4), wherein the detarring step (3) is performed under an oxygen-containing atmosphere.

Ordinarily, when detarring is performed under an oxygen-containing atmosphere, this has adverse effects such as the occurrence of side reactions such as activation and an increase in the specific surface area of the carbonaceous material. Accordingly, it is ordinarily necessary to perform detarring under an inert gas (for example, nitrogen or argon) atmosphere. However, in the present invention, even when detarring is performed in an oxygen-containing atmosphere, an increase in specific surface area is not observed.

The occurrence of activation can be presumed from the specific surface area of the carbonaceous material after the heat treatment step (4) following detarring, and the specific surface area increases in a material in which activation has occurred. For example, when the detarring step (3) was performed under an oxygen-containing atmosphere using a plant-derived organic material (for example, coconut husk char) that had been heat-treated at 600°C, the specific surface area of the carbonaceous material after the heat treatment step (4) was 60 $m^2/g$, but when the detarring step (3) was performed in an oxygen-containing atmosphere using a plant-derived organic material (for example, a coffee residue) that had not been heat treated at a temperature of 500°C or higher, the specific surface area of the carbonaceous material after the heat treatment step (4) was 6 $m^2/g$, and no increase in specific surface area was observed. This numerical value is equivalent to that of a carbonaceous material subjected to detarring under an inert gas atmosphere.

The reason that detarring is possible under an oxygen-containing atmosphere in the present invention is not clear, but the reason is thought to be as follows. The plant-derived organic material used in the present invention is not subjected to heat treatment at a high temperature, so large amounts of tar content or gas are generated in the detarring step. The tar content or gas that is generated is preferentially consumed by an oxidation reaction, and it is presumed that activation does not occur because the oxygen reacting with the plant-derived organic material is exhausted.

In the present invention, detarring can be performed under an oxygen-containing atmosphere, so atmospheric control can be simplified. Further, by reducing the amount of inert gas such as nitrogen that is used, it is possible to reduce the manufacturing cost.

4. Heat treatment step

The heat treatment step under the production method of the present invention is a step of heat treating the crushed carbonaceous precursor at a temperature from 1000°C to 1500°C. This step is preferably performed under a non-oxidizing gas atmosphere. Heat treatment at a temperature from 1000°C to 1500°C is ordinarily called "final heat treatment" in the technical field of the present invention. In addition, in the heat treatment step of the present invention, pre-heat treatment may be performed as necessary prior to final heat treatment.

The heat treatment in the manufacturing method of the present invention can be performed in accordance with an ordinary procedure, and a carbonaceous material for an anode of a nonaqueous electrolyte secondary battery can be obtained by performing heat treatment. The heat treatment temperature is from 1000 to 1500°C. When the heat treatment temperature is less than 1000°C, a large amount of functional groups remain in the carbonaceous material, and the value of H/C increases. The irreversible capacity also increases due to a reaction with lithium, which is not preferable. The lower limit of the heat treatment temperature in the present invention is at least 1000°C, more preferably at least 1100°C, and particularly preferably at least 1150°C. On the other hand, when the heat treatment temperature exceeds 1500°C, the selective alignment of the carbon hexagonal plane increases, and the discharge capacity decreases, which is not preferable. The upper limit of the calcination temperature in the present invention is at most 1500°C, more preferably at most 1450°C, and particularly preferably at most 1400°C.

Heat treatment is preferably performed under a non-oxidizing gas atmosphere. Examples of non-oxidizing gases include helium, nitrogen, and argon, and these may be used alone or as a mixture. Further, heat treatment may also be performed under a gas atmosphere in which a halogen gas such as chlorine is mixed with the non-oxidizing gas described above. The amount of gas supplied (circulated amount) is not particularly limited but is at least 1 mL/min, preferably at least 5 mL/min, and even more preferably at least 10 mL/min per 1 g of the de-mineraled carbon precursor. In addition, heat treatment can also be performed under reduced pressure at a pressure of 10 kPa or less, for example. The heat treatment time is not particularly limited, but the retention time at a temperature of at least 1000°C, for example, may be from 0.05 to 10 hours, preferably from 0.05 to 3 hours, and more preferably from 0.05 to 1 hour. In addition, the crushing step described above may also be performed after calcination.

(Pre-heat treatment)

In the manufacturing method of the present invention, preliminary calcination may be performed. Pre-heat treatment is performed by heat treating the carbon source at a temperature of at least 300°C and less than 1000°C and preferably at least 300°C and less than 900°C. Pre-heat treatment removes volatile matter such as $CO_2$, CO, $CH_4$, and $H_2$, for example, and the tar content remaining even after the detarring step so that the generation of these components can be reduced and the burden of the furnace can be reduced in final heat treatment. That is, in addition to the detarring step, $CO_2$, CO, $CH_4$, $H_2$, or the tar content may also be removed by pre-heat treatment.

Pre-heat treatment is performed under an inert gas atmosphere, and examples of inert gases include nitrogen, argon, and the like. In addition, pre-heat treatment can be performed under reduced pressure at a pressure of 10 kPa or less, for example. The pre-heat treatment time is not particularly limited, but pre-heat treatment may be performed for 0.5 to 10 hours, for example, and is preferably performed for 1 to 5 hours. In addition, the crushing step may also be performed after pre-heat treatment. Further, pre-heat treatment removes volatile matter such as $CO_2$, $CO$, $CH_4$, and $H_2$, for example, and the tar content remaining even after the detarring step so that the generation of these components can be reduced and the burden of the furnace can be reduced in final heat treatment.

(Heat treatment with a halogen gas-containing non-oxidizing gas)

The heat treatment or pre-heat treatment in the present invention can be performed under a non-oxidizing gas containing a halogen gas. Examples of the halogen gas that is used include chlorine gas, bromine gas, iodine gas, and fluorine gas, but chlorine gas is particularly preferable. Further, a substance which easily discharges a halogen at a high temperature such as $CCl_4$ or $Cl_2F_2$ may also be supplied using an inert gas as a carrier.

Heat treatment or pre-heat treatment with a halogen gas-containing non-oxidizing gas may be performed at the final heat treatment temperature (1000 to 1500°C) but may also be performed at a lower temperature than that of final heat treament (for example, 300°C to 1000°C). This temperature range is preferably from 800 to 1400°C. The lower limit of the temperature is preferably 800°C and more preferably 850°C. The upper limit is preferably 1400°C, more preferably 1350°C, and most preferably 1300°C.

By heating the raw organic material and carbonizing the material via a step of heating the material under a halogen gas-containing atmosphere such as chlorine gas at the time of carbonization, the resulting carbonaceous material demonstrates an appropriate halogen content and has a fine structure suited to the storage of lithium. This makes it possible to achieve a large charge-discharge capacity. For example, in comparison to a case in which heat treatment was performed while supplying nitrogen gas at 0.2 L/min per 1 g of the carbon precursor, the discharge capacity increased by 7% when heat treatment was performed while supplying a mixed gas obtained by adding chlorine gas at 0.04 L/min to nitrogen gas at 0.2 L/min.

The halogen content contained in the carbonaceous material of the present invention, which is heat treated under a halogen gas-containing non-oxidizing gas atmosphere described below, is not particularly limited but is from 50 to 10,000 ppm, more preferably from 100 to 5000 ppm, and even more preferably from 200 to 3000 ppm.
The reason that a carbonaceous material for an anode of a nonaqueous electrolyte secondary battery having a large charge-discharge capacity is obtained by performing heat treatment or pre-heat treatment with a halogen gas-containing non-oxidizing gas is not certain, but it is thought that halogen reacts with the hydrogen atoms in the carbonaceous material and that carbonization progresses in a state in which hydrogen is rapidly removed from the carbonaceous material. In addition, halogen gas is also thought to have the effect of reducing residual mineral content as a result of reacting with the mineral content contained in the carbonaceous material. When the halogen content in the carbonaceous material is too small, hydrogen is not sufficiently removed in the course of the manufacturing process thereof, and there is a risk that the charge-discharge capacity will not sufficiently improve as a result. On the other hand, when the halogen content is too large, there may be the problem that the irreversible capacity increases as the residual halogen reacts with lithium inside the battery.

Accordingly, the present invention relates to a manufacturing method for a carbonaceous material for a nonaqueous electrolyte secondary battery, the method comprising the liquid phase de-mineral treatment step (1), the crushing step (2), the detarring step (3), and the heat treatment step (4), wherein heat treatment is performed under an inert gas containing a halogen gas atmosphere.

⟨⟨Intermediate manufacturing method⟩⟩

The manufacturing method for the intermediate (carbonaceous precursor) of the present invention comprises a step of de-mineral treating a plant-derived organic material with an average particle size of at least 100 μm using an acidic solution with a pH level of 3.0 or lower (liquid phase de-mineral treatment step); and a step of detarring the de-mineraled organic material at a temperature of from 300 to 1000°C, and the method preferably also includes a step of crushing the de-mineraled organic material (crushing step). Further, the liquid phase de-mineral treatment step described above is preferably performed at a temperature of at least 0°C and at most 80°C.

The liquid phase de-mineral treatment step, the detarring step, and the crushing step are the same as the liquid phase de-mineral treatment step, the detarring step, and the crushing step in the manufacturing method for a carbonaceous material for an anode of a nonaqueous electrolyte secondary battery according to the present invention. In the manufacturing method for an intermediate according to the present invention, the crushing step may be performed after the liquid phase de-mineral treatment step or after the detarring step. In addition, the intermediate (carbonaceous precursor) obtained as a result of the detarring step may or may not be crushed.

[3] Anode of a nonaqueous electrolyte secondary battery

The anode of a nonaqueous electrolyte secondary battery according to the present invention contains the carbonaceous material for an anode of a nonaqueous electrolyte secondary battery according to the present invention.

(Manufacturing of an anode)

An anode using the carbonaceous material of the present invention can be manufactured by adding a binder to the carbonaceous material, adding and kneading an appropriate amount of an appropriate solvent to form an electrode mixture, coating the electrode mixture to a current collector made of a metal plate or the like, and then drying and pressing. An electrode having high conductivity can be manufactured by using the carbonaceous material of the present invention without particularly adding a conductivity agent, but a conductivity agent may be added as necessary when preparing the electrode mixture for the purpose of imparting even higher conductivity. The conductivity agent that is used may be conductive carbon black, vapor grown carbon fiber (VGCF), a nanotube, or the like. The amount added differs depending on the type of the conductivity agent that is used, but when the added amount is too small, the expected conductivity cannot be achieved, which is not preferable. Conversely, when the added amount is too large, the dispersion of the conductivity agent in the electrode mixture becomes poor, which is not preferable. From this perspective, the proportion of the added amount of the conductivity agent is preferably from 0.5 to 10 mass% (here, it is assumed that the active material (carbonaceous material) + the amount of the binder + the amount of the conductivity agent= 100 mass%), more preferably from 0.5 to 7 mass%, and particularly preferably from 0.5 to 5 mass%. The binder is not particularly limited and may be a mixture of PVDF (polyvinylidene fluoride), polytetrafluoroethylene, and SBR (styrene-butadiene rubber) and CMC (carboxymethylcellulose) or the like as long as it does not react with the electrolyte. Of these, PVDF is preferable in that the PVDF adhering to the active material surface minimally inhibits lithium ion movement and in that favorable input/output characteristics can be achieved. A polar solvent such as N-methyl pyrrolidone (NMP) is preferably used to dissolve PVDF and form a slurry, but an aqueous emulsion such as SBR or CMC may also be dissolved in water. When the added amount of the binder is too large, the resistance of the resulting electrode becomes large, so the internal resistance of the battery becomes large. This diminishes the battery characteristics, which is not preferable. In addition, when the added amount of the binder is too small, the bonds between the anode material particles and the current collector become insufficient, which is not preferable. The preferable amount of the binder that is added differs depending on the type of the binder that is used. In the case of a PVDF-type binder, the added amount is preferably from 3 to 13 mass% and more preferably from 3 to 10 mass%. On the other hand, in the case of a binder using water as a solvent, a plurality of binders such as a mixture of SBR and CMC are often used in combination, and the total amount of all of the binders that are used is preferably from 0.5 to 5 mass% and more preferably from 1 to 4 mass%. The electrode active material layer is typically formed on both sides of the current collector, but the layer may be formed on one side as necessary. The number of required current collectors or separators becomes smaller as the thickness of the electrode active material layer increases, which is preferable for increasing capacity. However, it is more advantageous from the perspective of improving the input/output characteristics for the electrode area of opposite electrodes to be wider, so when the active material layer is too thick, the input/output characteristics are diminished, which is not preferable. The thickness of the active material layer (on each side) is preferably from 10 to 80 $\mu$m, more preferably from 20 to 75 $\mu$m, and particularly preferably from 20 to 60 $\mu$m.

(Water-soluble polymer binder)

A water-soluble polymer may be used as the binder used in a preferable anode of a nonaqueous electrolyte secondary battery according to the present invention. By using a water-soluble polymer in the anode of a nonaqueous electrolyte secondary battery according to the present invention, it is possible to obtain a nonaqueous electrolyte secondary battery in which the irreversible capacity does not increase due to exposure tests. In addition, a nonaqueous electrolyte secondary battery having excellent cycle characteristics can be obtained.

Such a water-soluble polymer can be used without any particular limitations as long as it is soluble in water. Specific examples include cellulose compounds, polyvinyl alcohol, starch, polyacrylamide, poly(meth)acrylic acid, ethylene-acrylic acid copolymers, ethylene-acrylamide-acrylic acid copolymers, polyethyleneimine, and derivatives or salts thereof. Of these, cellulose compounds, polyvinyl alcohol, poly(meth)acrylic acid, and derivatives thereof are preferable. In addition, it is even more preferable to use carboxymethylcellulose (CMC) derivatives, polyvinyl alcohol derivatives, and polyacrylic acid salts. These can be used alone or as a combination of two or more types.

The mass average molecular weight of the water-soluble polymer of the present invention is at least 10,000, more preferably at least 15,000, and even more preferably at least 20,000. When the mass average molecular weight is less than 10,000, the dispersion stability of the electrode mixture is diminished, and it tends to be eluted in the electrolyte, which is not preferable. In addition, the mass average molecular weight of the water-soluble polymer is at most 6,000,000 and more preferably at most 5,000,000. When the mass average molecular weight exceeds 6,000,000, the solubility in the solvent decreases, which is not preferable.

In the present invention, a water-insoluble polymer may be used in combination as a binder. These are dispersed in a water-based carrier to form an emulsion. Examples of preferable insoluble polymers include diene polymers, olefin polymers, styrene polymers (meth)acrylate polymers, amide polymers, imide polymers, ester polymers, and cellulose polymers.

Other thermoplastic resins used as binders for the anode can be used without any particular limitation as long as they have a binding effect and have resistance to the nonaqueous electrolyte that is used or resistance to electrochemical reactions with the anode. Specifically, two components including the water-soluble polymer and the emulsion described above are often used. The water-soluble polymer is primarily used as a dispersion-imparting agent or a viscosity adjusting agent, and the emulsion is critical for imparting the binding properties between particles and the flexibility of the electrode.

Of these, preferable examples include homopolymers or copolymers of conjugated diene monomers or acrylic acid ester monomers (including methacrylic acid ester-type monomers), and specific examples include polybutadiene, polyisoprene, polymethyl methacrylate, polymethyl acrylate, polyethyl acrylate, polybutyl acrylate, natural rubber, styrene-isoprene copolymers, 1,3-butadiene-isoprene-acrylonitrile copolymers, styrene-1,3-butadiene-isoprene copolymers, 1,3-butadiene-acrylonitrile copolymers, styrene-acrylonitrile-1,3-butadiene-methyl methacrylate copolymers, styrene-acrylonitrile-1,3-butadiene-itaconic acid copolymers, styrene-acrylonitrile-1,3-butadiene-methyl methacrylate-fumaric acid copolymers, styrene-1,3-butadiene-itaconic acid-methyl methacrylate-acrylonitrile copolymers, acrylonitrile-1,3-butadiene-methacrylic acid-methyl methacrylate copolymers, styrene-1,3-butadiene-itaconic acid-methyl methacrylate-acrylonitrile copolymers, styrene-acrylic acid n-butyl-itaconic acid-methyl methacrylate-acrylonitrile copolymers, styrene-acrylic acid n-butyl-itaconic acid-methyl methacrylate-acrylonitrile copolymers, acrylic acid 2-ethylhexyl-methyl acrylate-acrylic acid-methoxypolyethylene glycol monomethacrylate. Of these, polymers (rubbers) with rubber elasticity are suitably used. PVDF (polyvinylidene fluoride), PTFE (polytetrafluoroethylene), and SBR (styrene-butadiene rubber) are also preferable.

Further, examples of preferable water-insoluble polymers from the perspective of binding properties include carboxyl groups, carbonyloxy groups, hydroxyl groups, nitrile groups, carbonyl groups, sulfonyl groups, sulfoxyl groups, and epoxy groups. Particularly preferable examples of polar groups include carboxyl groups, carbonyloxy groups, and hydroxyl groups.

The content ratio of the water-soluble polymer in the binder described above is preferably from 8 to 100 mass%. When the ratio is less than 8 mass%, the water absorption resistance improves, but the cycle durability of the battery becomes insufficient.

When the added amount of the binder is too large, the resistance of the resulting electrode becomes large, so the internal resistance of the battery becomes large. This diminishes the battery characteristics, which is not preferable. In addition, when the added amount of the binder is too small, the bonds between the anode material particles and the current collector become insufficient, which is not preferable. The preferable added amount of the binder differs depending on the type of binder that is used, but in the case of a binder using water as a solvent, a plurality of binders such as a mixture of SBR and CMC are often used in combination, and the total amount of all of the binders that are used is preferably from 0.5 to 10 mass% and more preferably from 1 to 8 mass%.

Solvents that can be used are not particularly limited as long as it dissolves the binder described above and can favorably disperse the carbonaceous material. For example, one or two or more types selected from water, methyl alcohol, ethyl alcohol, propyl alcohol, N-methyl pyrrolidone (NMP), and the like can be used.

The electrode active material layer is typically formed on both sides of the current collector, but the layer may be formed on one side as necessary. The number of required current collectors or separators becomes smaller as the thickness of the electrode active material layer increases, which is preferable for increasing capacity. However, it is more advantageous from the perspective of improving the input/output characteristics for the electrode area of opposite electrodes to be wider, so when the active material layer is too thick, the input/output characteristics are diminished, which is not preferable. The thickness of the active material layer (on each side) is preferably from 10 to 80 μm, more preferably from 20 to 75 μm, and particularly preferably from 20 to 60 μm.

(Press force)

The press force in the manufacture of an electrode using the carbonaceous material of the present invention is not particularly limited. However, the press force is preferably from 2.0 to 5.0 tf/cm$^2$, more preferably from 2.5 to 4.5 tf/cm$^2$, and even more preferably from 3.0 to 4.0 tf/cm$^2$. By applying a press force after the carbonaceous material is coated and dried, the contact between active materials improves, and the conductivity also improves. Therefore, it is possible to obtain an electrode with excellent long-term cycle durability. When the press force is too low, the contact between the active materials becomes insufficient, so the resistance of the electrode becomes high, and the coulombic efficiency decreases, which may diminish the long-term durability. In addition, when the press force is too high, the electrode may bend due to rolling, which may make winding difficult.

For example, the cycle characteristics at 50°C were investigated for batteries using electrodes manufactured using the carbonaceous material of the present invention at a press force of 2.5 tf/cm$^2$ and 4.0 tf/cm$^2$. As a result, the discharge capacity retention rates of the 100th cycle were respectively less than 70% and 83%, and the cycle durability with the press force of 4.0 tf/cm$^2$ was better.

[4] Nonaqueous Electrolyte Secondary Battery

The nonaqueous electrolyte secondary battery of the present invention contains the anode of a nonaqueous electrolyte secondary battery according to the present invention. A nonaqueous electrolyte secondary battery using an anode of a nonaqueous electrolyte secondary battery using the carbonaceous material of the present invention has a low impurity content and guaranteed high reliability.

(Manufacturing of a nonaqueous electrolyte secondary battery)

When an anode for a nonaqueous electrolyte secondary battery is formed using the anode material of the present invention, the other materials constituting the battery such as the cathode material, separator, and the electrolyte solution are not particularly limited, and various materials that have been conventionally used or proposed for nonaqueous solvent secondary batteries can be used.

For example, laminated oxide-based (as represented by $LiMO_2$, where M is a metal such as $LiCoO_2$, $LiNiO_2$, $LiMnO_2$, or $LiNi_xCo_yMo_zO_2$ (where x, y, and z represent composition ratios), for example), olivine-based (as represented by $LiMPO_4$, where M is a metal such as $LiFePO_4$, for example), and spinel-based (as represented by $LiM_2O_4$, where M is a metal such as $LiMn_2O_4$, for example) complex metal chalcogen compounds are preferable as cathode materials, and these chalcogen compounds may be mixed as necessary. A cathode is formed by forming these cathode materials with an appropriate binder together with a carbonaceous material for imparting conductivity to the electrode and forming a layer on a conductive current collector.

A nonaqueous electrolyte solution used with this cathode and anode combination is typically formed by dissolving an electrolyte in a nonaqueous solvent. One type or two or more types of organic solvents such as propylene carbonate, ethylene carbonate, dimethyl carbonate, diethyl carbonate, dimethoxyethane, diethoxyethane, γ-butyl lactone, tetrahydrofuran, 2-methyl tetrahydrofuran, sulfolane, or 1,3-dioxolane, for example, may be used in combination as a nonaqueous solvent. In addition, $LiClO_4$, $LiPF_6$, $LiBF_4$, $LiCF_3SO_3$, $LiAsF_6$, LiCl, LiBr, $LiB(C_6H_5)_4$, $LiN(SO_3CF_3)_2$, or the like is used as an electrolyte. A secondary battery is typically formed by making a cathode layer and an anode layer formed as described above face one another via a liquid-permeable separator made of a nonwoven fabric or another porous material as necessary and immersing the product in an electrolyte solution. A permeable separator made of a nonwoven fabric or another porous material ordinarily used in secondary batteries can be used as a separator. Alternatively, a solid electrolyte formed from a polymer gel impregnated with an electrolyte solution may be used instead of or together with a separator.

(Electrolyte additive)

The nonaqueous electrolyte secondary battery of the present invention preferably contains an additive having a LUMO value within a range of from -1.10 to 1.11 eV in the electrolyte, wherein the LUMO value is calculated using an AM1 (Austin Model 1) calculation method of a semiemperical molecular orbital model. The nonaqueous electrolyte secondary battery using an anode of a nonaqueous electrolyte secondary battery using a carbonaceous material and an additive according to the present invention has high doping and dedoping capacity and demonstrates excellent high-temperature cycle characteristics.

The additive used in the nonaqueous electrolyte secondary battery of the present invention will be described hereafter. A solid electrolyte interface (SEI) is typically formed by the reductive decomposition of an organic electrolyte at the time of the initial charge. Here, using an additive which reductively decomposes earlier than the electrolyte makes it possible to control the properties of the SEI and to improve the high-temperature cycle characteristics. In order to select such an additive, the LUMO (Lowest Unoccupied Molecular Orbital) theory can be applied. LUMO expresses a molecular orbital function with no electrons in the lowest energy level. When a molecule accepts electrons, the electrons are embedded in this energy level, but the degree of reduction is determined by the value thereof. A lower LUMO value indicates characteristics with higher reduction, and a higher LUMO value indicates reduction resistance.

The LUMO value of a compound added to the electrolyte is determined using the AM1 calculation method in the semiemperical molecular orbital method, which is a quantum chemical calculation method.

The semiemperical molecular orbital method is categorized by the assumptions and the types of parameters as AM1, PM3 (Parametric method 3), MNDO (Modified Neglect of Differential Overlap), CNDO (Complete Neglect of Differential Overlap), INDO (Intermediate Neglect of Differential Overlap), MINDO (Modified Intermediate Neglect of Differential Overlap), or the like. The AM1 calculation method was developed by Dewer et al. in 1985 by partially improving the MNDO method so as to be suitable for hydrogen bond calculations. The AM1 method in the present invention was proposed by the computer program package Gaussian 03 (Gaussian Co.), but the present invention is not limited to this method.

The operating procedure for calculating the LUMO method using Gaussian 03 will be described hereafter. The visualization function included in the drawing program GaussView 3.0 was used for the modeling of the molecular structure at the stage prior to calculation. The molecular structure was created, and after the structure was optimized using the AM1 for the Hamiltonian in the "ground state" with a charge of "0", a spin of "Singlet", and a solvent effect of "none", an energy-point calculation was performed at the same level. The structure having the smallest total electron energy value obtained by structural optimization was defined as the most stable structure, and the numerical value corresponding to the lowest unoccupied molecular orbit in the molecular structure was determined as the LUMO value. The results were converted to units of electron volts using 1 a.u. = 27.2114 eV since the units are given in atomic units.

The LUMO value of the additive of the present invention determined by the AM1 method in the quantum chemical calculation method is preferably from -1.1 to 1.11 eV, more preferably from -0.6 to 1.0 eV, and even more preferably from 0 to 1.0 eV. When the LUMO value is 1.11 eV or higher, the material may not function as an additive, which is not preferable. In addition, when the LUMO value is -1.1 eV or lower, side reactions may be induced on the cathode side, which is not preferable.

Examples of additives with LUMO values from -1.10 to 1.11 eV include, but are not limited to, fluoroethylene carbonate (FEC, 0.9829 eV), trimethyl silyl phosphoric acid (TMSP, 0.415 eV), lithium tetrafluoroborate (LiBF4, 0.2376 eV), chloroethylene carbonate (ClEC, 0.1056 eV), propanesultone (PS, 0.0656 eV), ethylene sulfite (ES, 0.0248 eV), vinylene carbonate (VC, 0.0155 eV), vinyl ethylene carbonate (VEC, -0.5736 eV), dioxathiolane dioxide (DTD, -0.7831 eV), and lithium bis(oxalato)borate (LiBOB, -1.0427 eV).

When an anode for a nonaqueous electrolyte secondary battery is formed using the anode material of the present invention, with the exception of containing vinylene carbonate or fluoroethylene carbonate in the electrolyte, the other materials constituting the battery such as the cathode material, separator, and the electrolyte solution are not particularly limited, and various materials that have been conventionally used or proposed for nonaqueous solvent secondary batteries can be used.

An additive having a LUMO value within the range from -1.10 to 1.11 eV is contained in the electrolyte used in the nonaqueous electrolyte secondary battery, wherein the LUMO value is calculated using the AM1 calculation method in the semiemperical molecular orbital method, and one type or two or more types may be used in combination. The content in the electrolyte is preferably from 0.1 to 6 mass% and more preferably from 0.2 to 5 mass%. When the content is less than 0.1 mass%, a film originating from the reductive decomposition of the additive is not sufficiently formed, so the high-temperature cycle characteristics do not improve. When the content exceeds 6 mass%, a thick film is generated on the anode, so the resistance becomes large and the input/output characteristics are reduced.

A secondary battery is typically formed by making a cathode layer and an anode layer formed as described above face one another via a liquid-permeable separator made of a nonwoven fabric or another porous material as necessary and immersing the product in an electrolyte solution. A permeable separator made of a nonwoven fabric or another porous material ordinarily used in secondary batteries can be used as a separator. Alternatively, a solid electrolyte formed from a polymer gel impregnated with an electrolyte solution may be used instead of or together with a separator.

[5] Vehicle

The lithium ion secondary battery of the present invention is suitable as a battery to be mounted in a vehicle such as an automobile, for example (typically as a lithium ion secondary battery for driving the vehicle).

The vehicle of the present invention is not particularly limited and may ordinarily be a vehicle known as an electric vehicle, a fuel cell, or a hybrid vehicle with an internal combustion engine, but the vehicle comprises at least a power supply device equipped with the battery described above, an electric driving mechanism for driving the vehicle by supplying power from the power supply device, and a control device for controlling the electric driving mechanism. Further, the vehicle may also be equipped with a rheostatic brake or a regenerative brake and a mechanism for charging the lithium ion secondary battery by converting energy generated by braking into electricity.

Examples

The present invention will be described in detail hereafter using working examples, but these working examples do not limit the scope of the present invention.

The measurement methods for the physical properties of the carbonaceous material for a nonaqueous electrolyte secondary battery according to the present invention ("average particle size determined by laser diffraction", "atom ratio (H/c) of hydrogen atoms/carbon atoms", "true density determined by a pycnometer method using butanol (hereafter called a "butanol method")", "true density determined by a dry density measurement method using helium "hereafter called a "helium method")", and "average interlayer spacing $d_{002}$ of the carbonaceous material") will be described hereafter, but the physical properties described in this specification, including those of the working examples, are based on values determined by the following methods.

(Average particle size determined by laser diffraction)

Three drops of a dispersant (cationic surfactant "SN-WET 366" (made by the San Nopco Co.)) were added to approximately 0.01 g of a sample, and the dispersant was blended into the sample. Next, 30 mL of purified water was added, and after the purified water was dispersed for approximately 2 minutes with an ultrasonic washer, the particle size distribution within the particle size range of 0.5 to 3000 $\mu$m was determined with a particle size distribution measurement device ("SALD-3000S" made by the Shimadzu Corporation). The refractive index of the particles was from 2.0 to 0.1i. The average particle size $Dv_{50}$ ($\mu$m) was determined from the resulting particle size distribution as the particle size yielding a cumulative volume of 50%.

(Atom ratio of hydrogen atoms/carbon atoms (H/C))

The atom ratio was measured in accordance with the method prescribed in JIS M8819. That is, the ratio of the numbers of hydrogen/carbon atoms was determined by dividing the weight ratio of hydrogen and carbon in a sample obtained by elemental analysis using a CHN analyzer (2400II made by Perkin-elmer Inc.) by the mass numbers of the respective elements.

(Specific surface area)

The specific surface area (SSA) was measured in accordance with the method prescribed in JIS Z8830. A summary is given below. A value $v_m$ was determined by a one-point method (relative pressure x = 0.2) based on nitrogen adsorption at the temperature of liquid nitrogen using the approximation $v_m = 1/(v(1 - x))$ derived from the BET equation, and the specific area of the sample was calculated from the following formula:

$$\text{Specific surface area (SSA)} = 4.35 \times v_m \ (m^2/g)$$

(Here, $v_m$ is the amount of adsorption ($cm^3$/g) required to form a monomolecular layer on the sample surface; v is the amount of adsorption ($cm^3$/g); and x is the relative pressure)

Specifically, the amount of adsorption of nitrogen in the carbonaceous substance at the temperature of liquid nitrogen was measured as follows using a "Flow Sorb II2300" made by MICROMERITICS. A test tube was filled with the carbonaceous material, and the test tube was cooled to -196°C while infusing helium gas containing nitrogen gas at a concentration of 20 mol% so that the nitrogen was adsorbed in the carbonaceous material. Next, the test tube was returned to room temperature. The amount of nitrogen desorbed from the sample at this time was measured with a thermal conductivity detector and used as the adsorption gas amount v.

(Mineral content)

In order to measure content ratios of potassium, calcium, magnesium, silicon, and phosphorus, a carbon sample containing each prescribed element in advance was prepared, and a calibration curve was created for the relationship between the potassium K$\alpha$ ray intensity and the potassium content and, similarly, for the relationships between the K$\alpha$ ray intensity and content of calcium, magnesium, and silicon using a fluorescent X-ray analyzer. Next, the K$\alpha$ intensity in fluorescent X-ray analysis was measured for samples, and the content of each element was determined from the calibration curve created above.

Fluorescent X-ray analysis was performed under the following conditions using a LAB CENTER XRF-1700 made by the Shimadzu Corporation. The measured area of the sample was determined from the area inside the circumference with a diameter of 20 mm using a top irradiation-type holder. The sample to be measured was mounted by placing 0.5 g of the sample in a polyethylene container with an inside diameter of 25 mm, and the back was pressed with a plankton net. The measurement surface was covered with a polypropylene film, and measurements were taken. The X-ray source was set to 40 kV and 60 mA. For potassium, LiF (200) was used as an analyzing crystal, while a gas flow-type proportional counting tube was used as a detector, and the range over which 2θ is from 90 to 140° was measured at a scanning speed of 8°/min. For calcium, LiF (200) was used as an analyzing crystal, while a scintillation counter was used as a detector, and the range over which 2θ is from 56 to 60° was measured at a scanning speed of 8°/min.

(Sulfur)

After the carbonaceous sample was combusted with a bomb combustion method, the content was measured by ion chromatography.

(True density determined by a butanol method)

Measurements were performed using butanol in accordance with the method prescribed in JIS R7212. A summary is given below. The mass ($m_1$) of a pycnometer with a bypass line having an internal volume of approximately 40 mL was precisely measured. Next, after a sample was placed flat at the base of the bottle so as to have a thickness of approximately 10 mm, the mass ($m_2$) was precisely measured. Next, 1-butanol was slowly added to the bottle to a depth of approximately 20 mm from the base. Next, the pycometer was gently oscillated, and after it was confirmed that no large air bubbles were formed, the bottle was placed in a vacuum desiccator and gradually evacuated to a pressure of 2.0 to 2.7 kPa. The pressure was maintained for 20 minutes or longer, and after the generation of air bubbles stopped, the bottle was removed and further filled with 1-butanol. After a stopper was inserted, the bottle was immersed in a constant-temperature bath (adjusted to 3.0 ± 0.03°C) for at least 15 minutes, and the liquid surface of 1-butanol was aligned with the marked line. Next, the bottle was removed, and after the outside of the bottle was thoroughly wiped and the bottle was cooled to room temperature, the mass ($m_4$) was precisely measured. Next, the same pycnometer was filled with 1-butanol and immersed in a constant-temperature water bath in the same manner as described above. After the marked line was aligned, the mass ($m_3$) was measured. In addition, distilled water which was boiled immediately before use and from which the dissolved gas was removed was placed in the pycnometer and immersed in a constant-temperature water bath in the same manner as described above. After the marked line was aligned, the mass ($m_5$) was measured. The true density ($\rho_B$) was calculated using the following formula. This was defined as $\rho_{Bt}$.

$$[\text{Formula 1}] \qquad \rho_B = \frac{m_2 - m_1}{m_2 - m_1 - (m_4 - m_3)} \times \frac{m_3 - m_1}{m_5 - m_1} d$$

(Here, d is the specific gravity (0.9946) in water at 30°C)

(True density determined by the helium method)

A dry automatic densimeter AccuPyc1330 made by the Shimadzu Corporation was used to measure pH. Measurements were performed after the sample was dried for at least 5 hours at 200°C in advance. 1 g of the sample was placed in a 10 $cm^3$ cell, and measurements were performed at an ambient temperature of 23°C. The number of purge cycles was set to 5, and the average value of n = 5 for which it was confirmed that the volume matched within 0.5% in repeated measurements was defined as $\rho_H$.

The measurement device has a sample chamber and an expansion chamber, and the sample chamber has a pressure gauge for measuring the pressure inside the chamber. The sample chamber and the expansion chamber are connected by a connecting tube having a valve. A helium gas introduction tube having a stop valve is connected to the sample chamber, and a helium gas discharge tube having a stop valve is connected to the expansion chamber.

Specifically, measurements were taken as follows.

The volume of the sample chamber ($V_{CELL}$) and the volume of the expansion chamber ($V_{EXP}$) are measured in advance using calibration spheres of a known volume. A sample is placed in the sample chamber, and the inside of the system is filled with helium. The pressure inside the system at that time is defined as $P_a$. Next, the valves are closed, and helium gas is added to only the sample chamber until the pressure is increased to $P_1$. The valves are then opened, and when the expansion chamber and the sample chamber are connected, the pressure inside the system decreases to $P_2$ due to expansion.

The volume of the sample at this time ($V_{SAMP}$) is calculated using the following formula.

[Formula 2]
$$V_{SAMP} = V_{CELL} - [V_{EXP}/\{(P_1 - P_a)/(P_2 - P_a) - 1\}]$$

Accordingly, when the mass of the sample is defined as $W_{SAMP}$, the density is as follows:

[Formula 3]
$$\rho_{11} = W_{SAMP}/V_{SAMP}$$

(Average interlayer spacing $d_{002}$ of the carbonaceous material)

A sample holder was filled with a carbonaceous material powder, and measurements were performed with a symmetrical reflection method using an X'Pert PRO made by the PANalytical B.V Under conditions with a scanning range of $8 < 2\theta < 50°$ and an applied current/applied voltage of 45 kV/40 mA, an X-ray diffraction pattern was obtained using CuK$\alpha$ rays ($\lambda = 1.5418$ A) monochromated by an Ni filter as a radiation source. The diffraction pattern was corrected using the diffraction peak of the (111) planes of a high-purity silicone powder serving as a standard substance. The wavelength of the CuK$\alpha$ rays was set to 0.15418 nm, and $d_{002}$ was calculated by Bragg's equation.

(Working Example 1)

First, 300 g of 1% hydrochloric acid was added to 100 g of an extracted coffee residue, and this was stirred for 1 hour at 100°C and then filtered. Next, de-mineral treatment was performed by repeating a water washing operation of adding 300 g of boiling water, stirring for 1 hour, and filtering 3 times, and a de-mineraled coffee extract residue was thus obtained. After the resulting de-mineraled coffee extract residue was dried in a nitrogen gas atmosphere, the sample was detarred at 700°C to prepare a carbonaceous precursor. This was crushed using a rod mill to form carbonaceous precursor microparticles. Next, this carbon precursor was subjected to final heat treatment for 1 hour at 1250°C to obtain a carbonaceous material 1 with an average particle size of 10 $\mu$m.

(Working Example 2)

A carbonaceous material 2 was obtained in the same manner as in Working Example 1 with the exception that the acid used for de-mineral treatment was changed to sulfuric acid.

(Working Example 3)

A carbonaceous material 3 was obtained in the same manner as in Working Example 1 with the exception that the acid used for de-mineral treatment was changed to citric acid.

(Working Example 4)

A carbonaceous material 4 was obtained in the same manner as in Working Example 1 with the exception that the hydrochloric acid concentration was set to 0.5%.

(Working Example 5)

A carbonaceous material 5 was obtained in the same manner as in Working Example 1 with the exception that the hydrochloric acid concentration was set to 0.1%.

(Comparative Example 1)

A comparative carbonaceous material 1 was obtained in the same manner as in Working Example 1 with the exception that the de-mineral treatment step was not performed.

(Comparative Example 2)

After an extracted coffee residue was dried in a nitrogen gas atmosphere, the sample was detarred at 700°C and subjected to preliminary carbonization. Next, 300 g of 1% hydrochloric acid was added to 100 g of the coffee residue subjected to preliminary carbonization, and this was stirred for 1 hour at 100°C and then filtered. Next, de-mineral treatment was performed by repeating a water washing operation of adding 300 g of boiling water, stirring for 1 hour, and filtering 3 times, and a de-mineraled coffee extract residue was thus obtained. This was crushed using a rod mill to form carbonaceous precursor microparticles. Next, this carbon precursor was subjected to final heat treatment for 1 hour at 1250° to obtain a comparative carbonaceous material 2 with an average particle size of 10 μm.

(Comparative Example 3)

After an extracted coffee residue was dried in a nitrogen gas atmosphere, the sample was detarred at 700°C and subjected to preliminary carbonization. This was crushed using a rod mill to form a finely powdered substance. Next, 300 g of 1% hydrochloric acid was added to 100 g of the finely powdered coffee residue subjected to preliminary carbonization, and this was stirred for 1 hour at 100°C and then filtered. Next, de-mineral treatment was performed by repeating a water washing operation of adding 300 g of boiling water, stirring for 1 hour, and filtering 3 times, and a de-mineraled coffee extract residue was thus obtained. Next, this carbonaceous precursor was subjected to final heat treatment for 1 hour at 1250° to obtain a comparative carbonaceous material 3 with an average particle size of 10 μm.

(Comparative Example 4)

A comparative carbonaceous material 4 was obtained in the same manner as in Comparative Example 3 with the exception that the hydrochloric acid concentration at the time of de-mineral treatment was set to 35%.

Comparative Example 5

A comparative carbonaceous material 5 was obtained in the same manner as in Comparative Example 3 with the exception that only water washing was repeated without using an acid at the time of de-mineral treatment.

The conditions of de-mineral treatment and heat treatment and the contents of the elements contained in the resulting carbonaceous materials are respectively shown in Tables 1 and 2.

[Table 1]

| | De-mineral treatment particle size [μm] | Acid type | Acid concentration [%] | pH | De-mineral treatment temperature [°C] | De-mineral treatment time [min] |
|---|---|---|---|---|---|---|
| Working Example 1 | 1000< | Hydrochloric acid | 1.0 | 0.5 | 100 | 60 |
| Working Example 2 | 1000< | Hydrochloric acid | 1.0 | 0.5 | 100 | 60 |
| Working Example 3 | 1000< | Citric acid | 1.0 | 2.2 | 100 | 60 |
| Working Example 4 | 1000< | Hydrochloric acid | 0.5 | 1.0 | 100 | 60 |
| Working Example 5 | 1000< | Hydrochloric acid | 0.1 | 1.5 | 100 | 60 |
| Comparative Example 1 | - | - | - | - | - | - |
| Comparative Example 2 | 700 | Hydrochloric acid | 1.0 | 0.5 | 100 | 60 |
| Comparative Example 3 | 20 | Hydrochloric acid | 1.0 | 0.5 | 100 | 60 |
| Comparative Example 4 | 20 | Hydrochloric acid | 35.0 | 0.5 | 100 | 60 |
| Comparative Example 5 | 1000< | - | 0.0 | 7.5 | 100 | 60 |

[Table 2]

| | P [ppm] | S [ppm] | K [ppm] | Ca [ppm] | Mg [ppm] | Si [ppm] | Dv50 [μm] | SSA [m2/g] | H/C | pBt [g/cm3] | d002 [nm] |
|---|---|---|---|---|---|---|---|---|---|---|---|
| Working Example 1 | 743 | 860 | N.D. | N.D. | N.D. | 55 | 10.2 | 6.2 | 0.01 | 1.59 | 0.377 |
| Working Example 2 | 880 | 847 | N.D. | N.D. | N.D. | 81 | 9.7 | 6.8 | 0.01 | 1.59 | 0.377 |
| Working Example 3 | 980 | 880 | N.D. | N.D. | N.D. | 68 | 10.1 | 5.4 | 0.02 | 1.59 | 0.377 |
| Working Example 4 | 760 | 860 | N.D. | N.D. | N.D. | 58 | 8.7 | 6.1 | 0.02 | 1.59 | 0.377 |
| Working Example 5 | 830 | 855 | 131 | 196 | N.D. | 61 | 8.6 | 4.3 | 0.02 | 1.58 | 0.376 |
| Comparative Example 1 | 4180 | 880 | 1930 | 1232 | 1220 | 165 | 10.8 | 3.6 | 0.02 | 1.55 | 0.375 |
| Comparative Example 2 | 2013 | 842 | 913 | 1133 | 1050 | 143 | 9.8 | 6.0 | 0.02 | 1.55 | 0.379 |
| Comparative Example 3 | 760 | 873 | 40 | 412 | 1280 | 157 | 10.0 | 5.4 | 0.02 | 1.55 | 0.379 |
| Comparative Example 4 | 4570 | 868 | 4307 | 1909 | 1303 | 225 | 10.6 | 5.8 | 0.02 | 1.55 | 0.379 |
| Comparative Example 5 | 847 | 877 | 651 | 980 | 482 | 121 | 11.3 | 4.0 | 0.02 | 1.54 | 0.375 |

(Active material doping-dedoping tests)

Anodes and nonaqueous electrolyte secondary batteries were produced by performing the following operations (a) to (c) using the carbonaceous materials 1 to 5 and the comparative carbonaceous materials 1 to 5 obtained in Working Examples 1 to 5 and Comparative Examples 1 to 5, and the electrode performances thereof were evaluated.

(a) Electrode production

First, NMP was added to 90 parts by mass of the carbonaceous material described above and 10 parts by mass of polyvinylidene fluoride ("KF#1100" made by the Kureha Corporation). This was formed into a pasty consistency and applied uniformly to copper foil. After this was dried, the sample was stamped out of the copper foil in a disc shape with a diameter of 15 mm, and this was pressed to form an electrode. The amount of the carbonaceous material in the electrode was adjusted to approximately 10 mg.

(b) Production of a test battery

Although the carbonaceous material of the present invention is suitable for forming an anode for a nonaqueous electrolyte secondary battery, in order to precisely evaluate the discharge capacity (dedoping capacity) and the irreversible capacity (non-dedoping capacity) of the battery active material without being affected by fluctuation in the performances of the counter electrode, a lithium secondary battery was formed using the electrode obtained above together with a counter electrode comprising lithium metal with stable characteristics, and the characteristics thereof were evaluated.

The lithium electrode was prepared inside a glove box in an Ar atmosphere. An electrode (counter electrode) was formed by spot-welding a stainless steel mesh disc with a diameter of 16 mm on the outer lid of a 2016-size coin-type battery can in advance, stamping a thin sheet of metal lithium with a thickness of 0.8 mm into a disc shape with a diameter of 15 mm, and pressing the thin sheet of metal lithium into the stainless steel mesh disc.

Using a pair of electrodes manufactured in this way, $LiPF_6$ was added at a proportion of 1.5 mol/L to a mixed solvent prepared by mixing ethylene carbonate, dimethyl carbonate, and methyl ethyl carbonate at a volume ratio of 1:2:2 as an electrolyte solution. A polyethylene gasket was used as a fine porous membrane separator made of borosilicate glass fibers with a diameter of 19 mm to assemble a 2016-size coin-type nonaqueous electrolyte lithium secondary battery in an Ar glove box.

(c) Measurement of battery capacity

Charge-discharge tests were performed on a lithium secondary battery with the configuration described above using a charge-discharge tester ("TOSCAT" made by Toyo System Co., Ltd.). A lithium doping reaction for inserting lithium into the carbon electrode was performed with a constant-current/constant-voltage method, and a dedoping reaction was performed with a constant-current method. Here, in a battery using a lithium chalcogen compound for the cathode, the doping reaction for inserting lithium into the carbon electrode is called "charging", and in a battery using lithium metal for a counter electrode, as in the test battery of the present invention, the doping reaction for the carbon electrode is called "discharging". The manner in which the doping reactions for inserting lithium into the same carbon electrode thus differs depending on the pair of electrodes used. Therefore, the doping reaction for inserting lithium into the carbon electrode will be described as "charging" hereafter for the sake of convenience. Conversely, "discharging" refers to a charging reaction in the test battery but is described as "discharging" for the sake of convenience since it is a dedoping reaction for removing lithium from the carbonaceous material. The charging method used here is a constant-current/constant-voltage method. Specifically, constant-current charging was performed at 0.5 mA/cm$^2$ until the terminal voltage reached 0 mV. After the terminal voltage reached 0 mV, constant-voltage charging was performed at a terminal voltage of 0 mV, and charging was continued until the current value reached 20 μA. At this time, a value determined by dividing the electricity supply by the mass of the carbonaceous material of the electrode is defined as the charge capacity per unit mass of the carbonaceous material (mAh/g). After the completion of charging, the battery circuit was opened for 30 minutes, and discharging was performed thereafter. Discharging was performed at a constant current of 0.5 mA/cm$^2$ until the final voltage reached 1.5 V At this time, a value determined by dividing the amount of discharged electricity by the mass of the carbonaceous material of the electrode is defined as the discharge capacity per unit mass of the carbonaceous material (mAh/g). The irreversible capacity was calculated as the discharge capacity subtracted from the charge capacity. The charge-discharge capacity and irreversible capacity were determined by averaging n = 3 measurements for test batteries produced using the same sample. The battery characteristics are shown in Table 3.

[Table 3]

| | Charge capacity [mAh/g] | Discharge capacity [mAh/g] | Irreversible capacity [mAh/g] | Efficiency [%] |
|---|---|---|---|---|
| Working Example 1 | 533 | 455 | 78 | 85 |
| Working Example 2 | 530 | 451 | 79 | 85 |
| Working Example 3 | 514 | 444 | 70 | 86 |
| Working Example 4 | 515 | 445 | 70 | 86 |
| Working Example 5 | 490 | 425 | 65 | 87 |
| Comparative Example 1 | 449 | 387 | 62 | 86 |
| Comparative Example 2 | - | - | - | - |
| Comparative Example 3 | - | - | - | - |
| Comparative Example 4 | - | - | - | - |
| Comparative Example 5 | 476 | 415 | 62 | 87 |

It was confirmed that the content of metal elements such as potassium, calcium, and magnesium was lower in all of the carbonaceous materials of the working examples than in the comparative examples. The content of potassium and calcium was dramatically reduced in the carbonaceous material of Working Example 1 in comparison to that of Comparative Examples 2 and 3. That is, by directly de-mineral treating a plant-derived organic material with no history of heat treatment at a temperature of 500°C or higher using an acid, it became possible to efficiently remove the mineral content contained in the plant-derived organic material, even when a fine powder is not used. Further, this not only eliminates the need for a crushing step prior to de-mineral treatment, but it also makes it possible to prevent a decrease in operability due to the use of a fine powder in the de-mineral treatment step.

Further, it was confirmed from the results of Table 3 that by reducing the content of potassium, calcium, and the like in the carbonaceous material with the method of the present invention, it is possible to dramatically improve the charge-discharge characteristics of a lithium ion secondary battery using the material.

Further, the phosphorus content and sulfur content of the carbonaceous material of Working Example 1 were within the ranges of the invention of this application, and the content of potassium and calcium was dramatically reduced in comparison to that of Comparative Examples 2 and 3. In addition, by reducing the content of potassium, calcium, and the like in the carbonaceous material with the method of the present invention, it is possible to improve the charge-discharge capacity and the charge-discharge efficiency when a battery is formed using the material as an anode for a nonaqueous electrolyte secondary battery.

The reason that an optimal carbonaceous material for an anode of a nonaqueous electrolyte secondary battery is obtained as a result of containing elements other than plant-derived carbon such as phosphorus or sulfur is not certain, but it is thought that some of these elements form covalent bonds with carbon atoms. For example, the bond distance between carbon atoms of a benzene ring is 1.337 A, and when the atoms are bound thereto, the bonding distance increases. In this way, when the bond distance increases, the crystallite structure of the carbonaceous material breaks down to form a random structure. New pores are then formed, and these serve as a lithium ion doping source. In addition, the aforementioned elements other than carbon have high affinity to lithium ions, so the doping amount of lithium ions is a doping amount corresponding to the affinity with the aforementioned elements other than carbon in addition to the doping amount resulting from the structural control associated with new pore formation. The doping amount of the carbonaceous material thus increases further, which yields excellent cycle characteristics and load characteristics and makes it possible to improve the charge-discharge capacity and the charge-discharge efficiency. In addition, some of the phosphorus or sulfur is incorporated into the carbon structure in the state of an electrically stable compound, and it is presumed that this does not have an adverse effect on performance.

(Working Example 6)

First, 300 g of 1% hydrochloric acid (pH 0.5) was added to 100 g of a coffee residue obtained by extracting blended coffee beans, and this was stirred for 1 hour at 20°C and filtered. Next, de-mineral treatment was performed by repeating a water washing operation of adding 300 g of water at 20°C, stirring for 1 hour, and filtering 3 times, and a de-mineraled coffee extract residue was thus obtained. After the resulting de-mineraled coffee extract residue was dried in a nitrogen gas atmosphere, the sample was detarred at 700°C to prepare a carbonaceous precursor. This was crushed using a rod mill to form carbonaceous precursor microparticles. Next, the carbonaceous precursor microparticles were subjected to final heat treatment for 1 hour at 1250°C to obtain a carbonaceous material 6 with an average particle size of 9.8 $\mu$m. The conditions of de-mineral treatment and heat treatment and physical properties of the resulting carbonaceous materials are shown in Table 4.

(Working Examples 7 to 9)

Carbonaceous materials 7 to 9 were obtained in the same manner as in Working Example 6 with the exception that the temperature was respectively set to 5°C, 40°C, and 70°C. Physical properties of the resulting carbonaceous materials are shown in Table 4.

(Working Example 10)

Carbonaceous material 10 was obtained in the same manner as in Working Example 6 with the exception that a residue obtained by extracting Brazilian beans (arabica variety) was used as a coffee residue. Physical properties of the resulting carbonaceous materials are shown in Table 4.

(Working Example 11)

Carbonaceous material 11 was obtained in the same manner as in Working Example 6 with the exception that a residue obtained by extracting Brazilian beans (arabica variety) with a different degree of roasting was used as a coffee residue. Physical properties of the resulting carbonaceous materials are shown in Table 4.

(Working Example 12)

Carbonaceous material 12 was obtained in the same manner as in Working Example 6 with the exception that a residue obtained by extracting Vietnamese beans (canephora variety) was used as a coffee residue. Physical properties of the resulting carbonaceous materials are shown in Table 4.

(Working Example 13)

First, 300 g of 1% hydrochloric acid was added to 100 g of coffee residue to perform de-mineral treatment, and this was stirred for 1 hour at 100°C and then filtered. Carbonaceous material 13 was obtained in the same manner as in Working Example 6 with the exception that a water washing operation of adding 300 g of boiling water, stirring for 1 hour, and then filtering was repeatedly performed 3 times. Physical properties of the resulting carbonaceous materials are shown in Table 4.

(Comparative Example 6)

A comparative carbonaceous material 6 was obtained in the same manner as in Working Example 6 with the exception that the de-mineral treatment step was not performed. Physical properties of the resulting carbonaceous materials are shown in Table 4.

(Comparative Example 7)

A comparative carbonaceous material 7 was obtained in the same manner as in Working Example 6 with the exception that water (pH 7.5) was used without using hydrochloric acid for de-mineral treatment. Physical properties of the resulting carbonaceous materials are shown in Table 4.

[Table 4]

| | De-mineral treatment temperature [°C] | pH | $Dv_{50}$ [μm] | SSA [m²/g] | $d_{002}$ [nm] | H/C | K [ppm] | Ca [ppm] |
|---|---|---|---|---|---|---|---|---|
| Working Example 6 | 20 | 0.5 | 9.8 | 6.2 | 0.378 | 0.02 | N.D. | N.D. |
| Working Example 7 | 5 | 0.5 | 8.9 | 6.4 | 0.378 | 0.02 | N.D. | N.D. |
| Working Example 8 | 40 | 0.5 | 8.2 | 6.1 | 0.378 | 0.02 | N.D. | N.D. |
| Working Example 9 | 70 | 0.5 | 7.8 | 5.1 | 0.377 | 0.02 | N.D. | N.D. |
| Working Example 10 | 20 | 0.5 | 9.6 | 6.4 | 0.379 | 0.03 | N.D. | N.D. |
| Working Example 11 | 20 | 0.5 | 9.7 | 5.7 | 0.379 | 0.02 | N.D. | N.D. |
| Working Example 12 | 20 | 0.5 | 7.8 | 6.7 | 0.379 | 0.02 | N.D. | N.D. |
| Working Example 13 | 100 | 0.5 | 7.8 | 8.7 | 0.377 | 0.01 | N.D. | N.D. |
| Comparative Example 6 | Not de-mineral treated | - | 8.6 | 7.2 | 0.375 | 0.02 | 7490 | 3910 |
| Comparative Example 7 | 20 | 7.5 | 7.7 | 7.5 | 0.379 | 0.02 | 1850 | 2800 |

(Active material doping-dedoping tests)

Anodes and nonaqueous electrolyte secondary batteries were produced by performing the aforementioned operations (a) to (c) of the "(Active material doping-dedoping tests)" using the carbonaceous materials 6 to 13 and the comparative carbonaceous materials 6 and 7 of Working Examples 6 to 13 and Comparative Examples 6 and 7, and electrode performances thereof were evaluated. Battery characteristics are shown in Table 5.

[Table 5]

| | $\rho_{Bt}$ [g/cm³] | $\rho_H$ [g/cm³] | $\rho_H/\rho_{Bt}$ | Discharge capacity [mAh/g] | Irreversible capacity [mAh/g] | Efficiency [%] |
|---|---|---|---|---|---|---|
| Working Example 6 | 1.57 | 1.88 | 1.19 | 455 | 70 | 87 |
| Working Example 7 | 1.57 | 1.88 | 1.19 | 461 | 72 | 87 |
| Working Example 8 | 1.57 | 1.88 | 1.19 | 452 | 73 | 86 |
| Working Example 9 | 1.58 | 1.87 | 1.18 | 442 | 72 | 86 |
| Working Example 10 | 1.56 | 1.92 | 1.23 | 459 | 74 | 86 |
| Working Example 11 | 1.60 | 1.93 | 1.21 | 453 | 71 | 87 |
| Working Example 12 | 1.54 | 2.01 | 1.31 | 469 | 78 | 86 |
| Working Example 13 | 1.59 | 1.86 | 1.17 | 451 | 77 | 85 |
| Comparative Example 6 | 1.55 | 1.91 | 1.23 | 394 | 62 | 86 |

(continued)

| | $\rho_{Bt}$ [g/cm$^3$] | $\rho_H$ [g/cm$^3$] | $\rho_H/\rho_{Bt}$ | Discharge capacity [mAh/g] | Irreversible capacity [mAh/g] | Efficiency [%] |
|---|---|---|---|---|---|---|
| Comparative Example 7 | 1.54 | 1.77 | 1.15 | 412 | 68 | 86 |

The content of potassium and calcium was dramatically reduced in the carbonaceous material of Working Example 6 in comparison with that of Comparative Examples 6 and 7. On the other hand, in order to compare Working Examples 6 to 12 and Working Example 13, de-mineral treatment was performed within the preferable temperature range of the present invention (0°C to 80°C) using an acid so as to achieve the same potassium and calcium content as when a high-temperature acid is used. The discharge capacity of a battery using this carbonaceous material was measured directly, and it was confirmed that the irreversible capacity decreased and that the charge-discharge efficiency improved.

(Working Example 14)

First, 300 g of 1% hydrochloric acid was added to 100 g of an extracted coffee residue, and de-mineral treatment was performed by repeating a washing operation of stirring for 1 hour at 20°C, filtering, and then washing with 300 g of water at 20°C 3 times so as to obtain a de-mineraled coffee extract residue. After the resulting de-mineraled coffee extract residue was dried at 150°C in a nitrogen gas atmosphere, preliminary carbonization was performed by means of detarring for 1 hour at 700°C in a tube furnace under a nitrogen air flow. After this was crushed using a rod mill, the sample was screened with a 38 $\mu$m sieve, and the coarse particles were cut so as to obtain carbon precursor microparticles. Next, this carbon precursor was placed in a horizontal tube furnace and then held and carbonized for 1 hour 1250°C while infusing nitrogen gas so as to obtain carbonaceous material 14 with an average particle size of 6.1 $\mu$m.

(Working Example 15)

Carbonaceous material 15 was obtained in the same manner as carbonaceous material 14 with the exception that a residue obtained by extracting Brazilian beans (arabica variety) with a different degree of roasting was used as a coffee residue.

(Working Example 16)

Carbonaceous material 16 was obtained in the same manner as carbonaceous material 14 with the exception that a residue obtained by extracting Vietnamese beans (canephora variety) was used as a coffee residue.

(Working Example 17)

First, 171 g of 35% hydrochloric acid (special grade made by Junsei Chemical Co., Ltd.) and 5830 g of purified water were added to 2000 g of an extracted coffee residue (water content: 65%), and the pH was adjusted to 0.5. After the sample was stirred for 1 hour at a liquid temperature of 20°C, the sample was filtered to obtain an acid-treated coffee extract residue. Next, de-mineral treatment was performed by repeating a water washing operation of adding 6000 g of purified water to the acid-treated coffee extract residue and stirring for 1 hour 3 times, and a de-mineraled coffee extract residue was thus obtained.

After the resulting de-mineraled coffee extract residue was dried at 150°C in a nitrogen gas atmosphere, the sample was detarred for 1 hour at 380°C in a tube furnace to obtain a detarred and de-mineraled coffee extract residue. Next, 50 g of the resulting detarred and de-mineraled coffee extract residue were placed in an alumina case, and oxidation treatment was performed for 1 hour at 260°C under an air flow in an electric furnace to obtain an oxidized coffee extract residue.

Next, 30 g of the oxidized coffee extract residue were subjected to preliminary carbonization by means of detarring for 1 hour at 700°C under a nitrogen air flow in a tube furnace. This was crushed with a rod mill to form carbonaceous precursor microparticles. Next, this carbon precursor was placed in a horizontal tube furnace and then held and carbonized for 1 hour 1250°C while infusing nitrogen gas so as to obtain carbonaceous material 17 with an average particle size of 6.2 $\mu$m.

(Working Example 18)

Carbonaceous material 18 was obtained in the same manner as in Working Example 13 with the exception that the average particle size was set to 11 μm.

(Comparative Example 8)

A comparative carbonaceous material 8 was obtained in the same manner as in Working Example 13 with the exception that the final heat treatment temperature was set to 800°C.

Anodes using the carbonaceous materials of the working examples and comparative examples were produced, and the resistance values measured with the method described below and the battery characteristics measured in the same manner as described above are shown in Table 7.

(Measurement cell production method)

First, NMP was added to 94 parts by mass of each of the carbonaceous materials obtained in the working examples or comparative examples described above and 6 parts by mass of polyvinylidene fluoride (KF#9100 made by the Kureha Corporation). This was formed into a pasty consistency and applied uniformly to copper foil. After the sample was dried, the coated electrode was stamped into a disc shape with a diameter of 15 mm, and this was pressed so as to form an anode.

Next, NMP was added to 94 parts by mass of lithium cobaltate (LiCoO2, "Cellseed C-5H made by Nippon Chemical Industrial Co., Ltd.), 3 parts by mass of carbon black, and 3 parts by mass of polyvinylidene fluoride (KF#1300 made by the Kureha Corporation). This was formed into a pasty consistency and then applied uniformly to aluminum foil. After the sample was dried, the coated electrode was stamped into a disc shape with a diameter of 14 mm. Here, the amount of lithium cobaltate in the cathode was adjusted so as to achieve 95% of the charge capacity of the anode active material measured in (c). The capacity of lithium cobaltate was calculated as 150 mAh/g.

Using a pair of electrodes prepared in this way, LiPF$_6$ was added at a proportion of 1.5 mol/L to a mixed solvent prepared by mixing ethylene carbonate, dimethyl carbonate, and methyl ethyl carbonate at a volume ratio of 1:2:2 as an electrolyte solution. A polyethylene gasket was used as a fine porous membrane separator made of borosilicate glass fibers with a diameter of 19 mm to assemble a 2032-size coin-type nonaqueous electrolyte lithium secondary battery in an Ar glove box.

(DC resistance measurement method)

First, aging is performed by repeating the charge-discharge cycle twice. The conversion of the current value to a C-rate in aging is performed by calculating the value from the electrical capacitance and mass of lithium cobaltate prescribed above. Charging is performed with a constant current/constant voltage. Charging is performed under charging conditions with a constant current of 0.2 C (the current required to charge for 1 hour is defined as 1 C) until the voltage reaches 4.2 V The current is then attenuated (while maintaining a constant voltage) so as to maintain the voltage at 4.2 V, and charging is continued until the current reaches (1/100) C. After the completion of charging, the battery circuit was opened for 30 minutes, and discharging was performed thereafter. Discharging was performed at a constant current of 0.2 C until the battery voltage reached 2.75 V The current was respectively set to 0.4 C in the second charge-discharge cycle.

Next, after charging was performed at 0.4 C until the capacity reached 50% of the SOC (State of Charge), pulse charging-discharging was performed in a low-temperature incubator (0°C atmosphere). The pulse charge-discharge cycle is performed using an open circuit for 600 seconds after 10 seconds of charging at a constant current and then 600 seconds of an open circuit after 10 seconds of discharging are referred to as one set, and measurements are taken at each current of 0.5 C, 1 C, and 2 C. The change in voltage with respect to each current was plotted, and the slope of linear approximation was calculated as the DC resistance.

[Table 6]

| | Dv$_{50}$ [μm] | SSA [m$^2$/g] | d$_{002}$ [nm] | H/C [-] | ρ$_{Bt}$ [g/cm$^3$] | K [ppm] | Ca [ppm] |
|---|---|---|---|---|---|---|---|
| Working Example 14 | 6.1 | 9.4 | 0.377 | 0.02 | 1.59 | N.D. | N.D. |
| Working Example 15 | 5.9 | 9.6 | 0.379 | 0.02 | 1.60 | N.D. | N.D. |
| Working Example 16 | 5.4 | 9.8 | 0.379 | 0.02 | 1.54 | N.D. | N.D. |

(continued)

|  | Dv$_{50}$ [μm] | SSA [m$^2$/g] | d$_{002}$ [nm] | H/C [-] | ρ$_{Bt}$ [g/cm$^3$] | K [ppm] | Ca [ppm] |
|---|---|---|---|---|---|---|---|
| Working Example 17 | 6.2 | 10.6 | 0.382 | 0.02 | 1.52 | N.D. | N.D. |
| Working Example 18 | 11.3 | 5.0 | 0.377 | 0.02 | 1.59 | N.D. | N.D. |
| Comparative Example 8 | 7.2 | 108.0 | 0.402 | 0.12 | 1.51 | N.D. | N.D. |

[Table 7]

|  | Dv$_{50}$ [μm] | Charge capacity [mAh/g] | Discharge capacity [mAh/g] | Irreversible capacity [mAh/g] | Efficiency [%] | DC resistance (0°C, relative value) | |
|---|---|---|---|---|---|---|---|
|  |  |  |  |  |  | Input | Output |
| Working Example 14 | 6.1 | 500 | 429 | 71 | 85.9 | 87.4 | 88.6 |
| Working Example 15 | 5.9 | 496 | 425 | 71 | 85.7 | 87.2 | 88.4 |
| Working Example 16 | 5.4 | 513 | 438 | 75 | 85.4 | 87.0 | 88.2 |
| Working Example 17 | 6.2 | 551 | 462 | 89 | 83.8 | 87.8 | 88.7 |
| Working Example 18 | 11.3 | 534 | 458 | 76 | 85.7 | 100 | 100 |
| Comparative Example 8 | 7.2 | 945 | 510 | 435 | 54.0 | 103 | 105 |

As is clear from Table 6, the resistance is small in anodes using the carbonaceous materials of Working Examples 14 to 17 having small particle sizes, and the irreversible capacity of batteries using the anodes is also small. It can be seen from the above results that the carbonaceous material of the present invention having high purity and specific physical properties is particularly useful for a secondary battery of a hybrid electric vehicle (HEV), which simultaneously requires high input and output characteristics for repeatedly supplying and receiving a large current.

(Carbonaceous material preparation)

In these working examples and comparative examples, coffee bean residues and coconut shells are prepared as carbonaceous material powders for anodes with the following methods. A carbonaceous material powder using a plant-derived organic material as a raw material is prepared with the following method.

(Working Example 19)

First, 300 g of 1% hydrochloric acid was added to 100 g of an extracted and blended coffee residue, and this was stirred for 1 hour at 20°C and then filtered. Next, de-mineral treatment was performed by repeating a water washing operation of adding 300 g of water at 20°C, stirring for 1 hour, and filtering 3 times, and a de-mineraled coffee extract residue was thus obtained. After the resulting de-mineraled coffee extract residue was dried in a nitrogen gas atmosphere, preliminary carbonization was performed by means of detarring for 1 hour at 700°C under a nitrogen air flow. This was crushed using a rod mill to form carbon precursor microparticles. Next, this carbon precursor was subjected to final heat treatment for 1 hour at 1250°C to obtain a carbonaceous material 19 with an average particle size of 10 μm. Characteristics of the investigated carbonaceous materials are respectively shown in Table 8.

(Working Example 20)

Carbonaceous material 20 was obtained in the same manner as in Working Example 19 with the exception that a residue obtained by extracting lightly roasted Brazilian beans was used as a coffee residue. Characteristics of the resulting carbonaceous material are shown in Table 8.

(Working Example 21)

Carbonaceous material 21 was obtained in the same manner as in Working Example 19 with the exception that a residue obtained by extracting deeply roasted Brazilian beans was used as a coffee residue. Characteristics of the resulting carbonaceous material are shown in Table 8.

(Working Example 22)

Carbonaceous material 22 was obtained in the same manner as in Working Example 19 with the exception that the heat treatment temperature was set to 800°C. Characteristics of the resulting carbonaceous material are respectively shown in Table 8.

(Comparative Example 9)

After a coconut shell char was pre-heat treated for 1 hour at 600°C in a nitrogen gas atmosphere (normal pressure), the sample was crushed to form a powdered carbon precursor with an average particle size of 19 $\mu$m. Next, de-mineral treatment was performed by repeating a washing operation of immersing the powdered carbon precursor was immersed in 35% hydrochloric acid for 1 hour and then washing the precursor for 1 hour with boiled water 2 times, and a de-mineraled powdered carbon precursor was thus obtained. 10 g of the resulting de-mineraled powdered carbon precursor was placed in a horizontal tube furnace and subjected to final heat treatment for 1 hour at 1200°C under a nitrogen atmosphere to obtain a comparative carbonaceous material 9. The characteristics of the resulting comparative carbonaceous material 9 are shown in Table 8.

[Table 8]

| | Carbonaceous material | K [ppm] | Ca [ppm] | $Dv_{50}$ [μm] | $d_{002}$ [nm] | H/C | $\rho_{Bt}$ [g/cm$^3$] | $\rho_H$ [g/cm$^3$] | $\rho_H/\rho_{Bt}$ | SSA [m$^2$/g] |
|---|---|---|---|---|---|---|---|---|---|---|
| Working Example 19 | Example carbonaceous material 19 | N.D. | N.D. | 10.2 | 0.378 | 0.02 | 1.57 | 1.88 | 1.19 | 6.2 |
| Working Example 20 | Example carbonaceous material 20 | N.D. | N.D. | 9.7 | 0.379 | 0.02 | 1.60 | 1.93 | 1.21 | 5.7 |
| Working Example 21 | Example carbonaceous material 21 | N.D. | N.D. | 7.8 | 0.379 | 0.02 | 1.54 | 2.01 | 1.31 | 6.7 |
| Working Example 22 | Example carbonaceous material 22 | N.D. | N.D. | 9.5 | 0.402 | 0.12 | 1.51 | 1.70 | 1.13 | 67 |
| Comparative Example 9 | Comparative carbonaceous material 9 | 30 | 170 | 10.0 | 0.384 | 0.02 | 1.46 | 2.13 | 1.16 | 6.0 |

(Active material doping-dedoping tests)

(a) Electrode production

A solvent was added to the carbonaceous material described above and a binder, and this was formed into a pasty consistency and applied uniformly to copper foil. After drying, the sample was stamped out of the copper foil in a disc shape with a diameter of 15 mm, and this was pressed to form the electrodes of Working Examples 23 to 27 and Comparative Examples 10 to 12. The compounding ratios of the carbonaceous materials and binders that were used are respectively shown in Table 9.

[Table 9]

| | Carbonaceous material | Binder | | Electrode composition |
| | | Type | Molecular weight | |
|---|---|---|---|---|
| Working Example 23 | Example carbonaceous material 19 | SBR/CMC | 250,000 to 300,000 | Active material/SBR/CMC = 96/3/1 |
| Working Example 24 | Example carbonaceous material 19 | PVDF/PVA | 25,000 | Active material/PVDF/PVA205 = 94/6/2 |
| Working Example 25 | Example carbonaceous material 20 | SBR/CMC | 250,000 to 300,000 | Active material/SBR/CMC = 96/3/1 |
| Working Example 26 | Example carbonaceous material 21 | SBR/CMC | 250,000 to 300,000 | Active material/SBR/CMC = 96/3/1 |
| Working Example 27 | Example carbonaceous material 19 | PAA | - | Active material/polyacrylic acid salt = 96/4 |
| Comparative Example 10 | Example carbonaceous material 19 | PVDF | 280,000 | Active material/PVDF = 96/4 |
| Comparative Example 11 | Comparative carbonaceous material 9 | SBR/CMC | 250,000 to 300,000 | Active material/SBR/CMC = 96/3/1 |
| Comparative Example 12 | | PVDF/PVA | 25,000 | Active material/PVDF/PVA205 = 94/6/2 |

In the table, the binders of the abbreviations that are used are as follows.

SBR: styrene-butadiene rubber
CMC: carboxymethylcellulose
PVA: polyvinyl alcohol
PAA: polyacrylic acid salt
PVDF: polyvinylidene fluoride ("KF#9100" made by the Kureha Corporation)"

Anodes and nonaqueous electrolyte secondary batteries were produced by performing the aforementioned operations (b) and (c) of the "(Active material doping-dedoping tests)", and the electrode performances thereof were evaluated. The initial characteristics of the batteries are shown in Table 10.

(b) Battery exposure test

Lithium secondary batteries with the configurations described above were left for 1 week in air at 25°C and 50% RH. The production of test batteries and the measurement of battery capacity were performed in the same manner as in the tests prior to exposure with the exception that exposed electrodes were used as test electrodes.

(c) Cycle test

(Anode production)

The electrode mixture of example carbon 1 was applied uniformly to one side of copper foil with a thickness of 18 $\mu$m, and this was heated and dried for 25 minutes at 120°C. After the sample was dried, the sample was stamped into a disc shape with a diameter of 15 mm, and this was pressed so as to form an anode. The mass of the active material of the disc-shaped anode was adjusted to 10 mg.

(Cathode production)

First NMP was added to 94 parts by mass of lithium cobaltate ("Cellseed C-5H made by Nippon Chemical Industrial Co., Ltd.), 3 parts by mass of polyvinylidene fluoride (KF#1300 made by the Kureha Corporation), and 3 parts by mass of carbon black. This was mixed to prepare a cathode mixture. The resulting mixture was applied uniformly to aluminum foil with a thickness of 50 $\mu$m. After the sample was dried, the coated electrode was stamped into a disc shape with a diameter of 14 mm, and this was pressed so as to form a cathode. The amount of lithium cobaltate in the cathode was adjusted to 95% of the charge capacity per unit mass of the active material in Working Example 23 measured by the method described above. The capacity of lithium cobaltate was calculated as 150 mAh/g.

Using a pair of electrodes prepared in this way, LiPF6 was added at a proportion of 1.5 mol/L to a mixed solvent prepared by mixing ethylene carbonate, dimethyl carbonate, and methyl ethyl carbonate at a volume ratio of 1:2:2 as an electrolyte solution. A polyethylene gasket was used as a fine porous membrane separator made of borosilicate glass fibers with a diameter of 19 mm to assemble a 2032-size coin-type nonaqueous electrolyte lithium secondary battery in an Ar glove box.

Here, cycle tests were begun after the sample was aged by repeating three cycles of charging and discharging. Under the constant-current/constant-voltage conditions used in the cycle tests, charging is performed at a constant current density of 2.5 mA/cm$^2$ until the battery voltage reaches 4.2 V, and charging is then continued until the current value reaches 50 $\mu$A while constantly changing the current value so as to maintain the voltage at 4.2 V (while maintaining a constant voltage). After the completion of charging, the battery circuit was opened for 10 minutes, and discharging was performed thereafter. Discharging was performed at a constant current density of 2.5 mA/cm$^2$ until the battery voltage reached 3.0 V This charging and discharging were repeated 100 times at 50°C, and the discharge capacity after 100 cycles was determined. In addition, a value determined by dividing the discharge capacity after 100 cycles by the discharge capacity of the first cycle was defined as the retention rate (%).

Characteristics of exposure tests and cycle characteristics are shown in Table 10 for the produced lithium secondary batteries.

[Table 10]

| | Initial characteristics | | | Initial characteristics after exposure | | | Increase in irreversible capacity before and after exposure [mAh/g] | Capacity after 100 cycles [mAh/g] (retention rate) |
|---|---|---|---|---|---|---|---|---|
| | Discharge capacity [mAh/g] | Irreversible capacity [mAh/g] | Efficiency [%] | Discharge capacity [mAh/g] | Irreversible capacity [mAh/g] | Efficiency [%] | | |
| Working Example 23 | 451 | 70 | 86.6 | 426 | 73 | 85.4 | 3 | 322 (88.3%) |
| Working Example 24 | 426 | 68 | 86.2 | 440 | 69 | 86.5 | 1 | 322 (80.4%) |
| Working Example 25 | 453 | 65 | 87.4 | 450 | 65 | 87.3 | 0 | - |
| Working Example 26 | 469 | 72 | 86.7 | 468 | 73 | 86.5 | 1 | - |
| Working Example 27 | 430 | 68 | 86.3 | 435 | 69 | 86.3 | 1 | - |
| Comparative Example 10 | 464 | 73 | 86.3 | 433 | 78 | 84.7 | 5 | 135 (34.1%) |
| Comparative Example 11 | 380 | 84 | 81.6 | 339 | 98 | 77.6 | 14 | - |
| Comparative Example 12 | 328 | 84 | 79.6 | 344 | 102 | 77.1 | 18 | - |

It was confirmed that when the carbonaceous material of the invention of this application is used, the irreversible capacity of the battery does not increase after exposure tests, even if a water-soluble resin is used as a binder. This may be due to the fact that although the carbonaceous material for an anode according to the invention of this application obtained by performing de-mineral treatment in an acidic solvent with a pH level of 3.0 or lower is a non-graphitizable carbonaceous material, the water absorbency is low, so even if a binder with high hygroscopicity such as a water-soluble resin is used, the material does not have a hygroscopicity level that would pose problems as an electrode. Therefore, the nonaqueous electrolyte secondary battery of the invention of this application demonstrated favorable durability in exposure tests. Further, as a result of being able to use a water-soluble resin, the material also demonstrates excellent durability in cycle tests.

The effects of additives used in the nonaqueous electrolyte secondary battery of the present invention were investigated using the carbonaceous materials manufactured in Working Examples 19 to 22 described above.

(Active material doping-dedoping tests)

(a) Electrode production

Nonaqueous electrolyte secondary batteries were produced as follows using the anode materials manufactured in each of the working examples and comparative examples described above, and characteristics thereof were evaluated. Although the carbonaceous material of the present invention is suitable for forming an anode for a nonaqueous electrolyte secondary battery, in order to precisely evaluate the discharge capacity and the irreversible capacity of the battery active material without being affected by fluctuation in the performance of the counter electrode, a lithium secondary battery was formed using the electrode obtained above together with a counter electrode comprising lithium metal with stable characteristics, and characteristics thereof were evaluated.

A cathode (carbon electrode) was manufactured as follows. First, N-methyl-2-pyrrolidone was added to 94 parts by mass of the manufactured anode material (carbonaceous material) and 6 parts by mass of polyvinylidene fluoride, and this was formed into a pasty consistency and uniformly applied to copper foil. After the sample was dried, a sheet-like electrode was stamped into a disc shape with a diameter of 15 mm, and this was pressed to form an electrode. The mass of the carbonaceous material (anode material) in the electrode was adjusted to 10 mg, and the material was pressed so that the filling rate of the carbonaceous material (density of the carbonaceous material in the electrode/true density determined by the butanol method) was approximately 61%.

The anode (lithium electrode) was prepared inside a glove box in an Ar atmosphere. An electrode was formed by spot-welding a stainless steel mesh disc with a diameter of 16 mm on the outer lid of a 2016-size coin-type battery can in advance, stamping a thin sheet of metal lithium with a thickness of 0.8 mm into a disc shape with a diameter of 15 mm, and pressing the thin sheet of metal lithium into the stainless steel mesh disc.

(b) Production of a test battery

Using the cathode and the anode described above, $LiPF_6$ was added at a proportion of 1.5 mol/L to a mixed solvent prepared by mixing ethylene carbonate, dimethyl carbonate, and methyl ethyl carbonate at a volume ratio of 1:2:2 as an electrolyte solution, and the additives shown in Table 11 were added at a ratio of 1 or 3 wt.%. A polyethylene gasket was used as a fine porous membrane separator made of borosilicate glass fibers with a diameter of 19 mm to assemble a 2016-size coin-type nonaqueous electrolyte lithium secondary battery in a glove box with an Ar atmosphere. In addition, the same materials were used as comparative electrolytes in the comparative examples and reference examples (Table 11) with the exception that additives were not used.

(c) Measurement of battery capacity

Charge-discharge tests were performed on a lithium secondary battery with the configuration described above using a charge-discharge tester (TOSCAT" made by Toyo System Co., Ltd.) in accordance with a constant current/constant voltage method. Here, "charging" refers to a discharging reaction in the test battery, but in this case, the reaction is one in which lithium is inserted into the carbonaceous material, so it will be described as "charging" hereafter for the sake of convenience. Conversely, "discharging" refers to a charging reaction in the test battery but is described as "discharging" for the sake of convenience since it is a reaction for eliminating lithium from the carbonaceous material. In the constant current/constant voltage method employed here, charging is performed at a constant current density of 0.5 mA/cm$^2$ until the battery voltage reaches 0 V, and charging is then continued until the current value reaches 20 μA while constantly changing the current value so as to maintain the voltage at 0 V (while maintaining a constant voltage). A value determined by dividing the electricity supply at this time by the mass of the carbonaceous material of the electrode is defined as the charge capacity (doping capacity) per unit mass of the carbonaceous material (mAh/g). After the completion of charging, the battery circuit was opened for 30 minutes, and discharging was performed thereafter. Discharging is performed at a constant current density of 0.5 mA/cm$^2$ until the battery voltage reaches 1.5 V, and a value determined by dividing the amount of electricity discharged at this time by the mass of the carbonaceous material of the electrode is defined as the discharge capacity (dedoping capacity) per unit mass of the carbonaceous material (mAh/g). The irreversible capacity (non-dedoping capacity) is calculated as the charge capacity minus the discharge capacity, and the efficiency (%) is calculated as (discharge capacity/charge capacity) x 100. The charge-discharge capacity and irreversible capacity were determined by averaging n = 3 measurements for test batteries produced using the same sample.

(High-temperature cycle test)

(a) Measurement cell production method

First, NMP was added to 94 parts by mass of the carbonaceous material described above and 6 parts by mass of polyvinylidene fluoride ("KF#9100" made by the Kureha Corporation). This was formed into a pasty consistency and applied uniformly to copper foil. After the sample was dried, the coated electrode was stamped into a disc shape with a diameter of 15 mm, and this was pressed so as to form an anode.

Next, NMP was added to 94 parts by mass of lithium cobaltate (LiCoO$_2$, "Cellseed C-5H made by Nippon Chemical Industrial Co., Ltd.), 3 parts by mass of carbon black, and 3 parts by mass of polyvinylidene fluoride (KF#1300 made by the Kureha Corporation). This was formed into a pasty consistency and then applied uniformly to aluminum foil. After the sample was dried, the coated electrode was stamped into a disc shape with a diameter of 14 mm. Here, the amount of lithium cobaltate in the cathode was adjusted so as to achieve 95% of the charge capacity of the anode active material measured in (c). At this time, the capacity of lithium cobaltate was calculated as 150 mAh/g.

Using a pair of electrodes prepared in this way, the same material as that used in the active material doping-dedoping tests was used as an electrolyte solution. A polyethylene gasket was used as a fine porous membrane separator made of borosilicate glass fibers with a diameter of 19 mm to assemble a 2032-size coin-type nonaqueous electrolyte lithium secondary battery in an Ar glove box.

(b) Cycle test

Charging is performed with a constant current/constant voltage. Charging is performed under charging conditions with a constant current (2 C; the current required to charge for 1 hour is defined as 1 C) until a voltage of 4.2 V is reached. The current is then attenuated (while maintaining a constant voltage) so as to maintain the voltage at 4.2 V, and charging is continued until the current reaches (1/100) C. After the completion of charging, the battery circuit was opened for 30 minutes, and discharging was performed thereafter. Discharging was performed at a constant current (2 C) until the battery voltage reached 2.75 V The first three cycles were performed at 25°C, and subsequent cycles were performed in a constant-temperature bath at 50°C.

The evaluation of cycle characteristics was performed defining the initial charging-discharging after being transferred to the constant-temperature bath at 50°C as the first cycle and using a value determined by dividing the discharge capacity after 150 cycles by the discharge capacity of the first cycle as the discharge capacity retention rate (%).

The additives that were used and the characteristics of lithium secondary batteries produced with the manufacturing method described above are shown in Table 11. When Comparative Example 13 and Working Examples 28 to 31 are compared, it can be seen that the high-temperature cycle characteristics improve as a result of using an additive having a LUMO value of from -1.10 to 1.11 eV in accordance with the present invention. This is the same for Working Examples 32 and 33. In addition, it can be seen from Comparative Example 14 that the high-temperature cycle characteristics do not improve when the LUMO value exceeds 1.10 eV. On the other hand, since a carbonaceous material having a d$_{002}$, H/C, or the like deviating from the prescribed ranges was used in Comparative Example 15, the initial characteristics of the battery are poor.

[Table 11]

| | Carbonaceous material used | Additive | Added amount [wt.%] | Charge capacity [mAh/g] |
|---|---|---|---|---|
| Working Example 28 | Example carbonaceous material 19 | FFC | 1 | 513 |
| Working Example 29 | Example carbonaceous material 19 | FEC | 3 | 519 |
| Working Example 30 | Example carbonaceous material 19 | VC | 3 | 507 |
| Working Example 31 | Example carbonaceous material 19 | CIEC | 3 | 517 |
| Working Example 32 | Example carbonaceous material 20 | FEC | 3 | 519 |
| Working Example 33 | Example carbonaceous material 21 | FEC | 3 | 534 |

| | | | | |
|---|---|---|---|---|
| Comparative Example 13 | Example carbonaceous material 19 | - | - | 537 |
| Comparative Example 14 | Example carbonaceous material 19 | PC | 3 | 531 |
| Comparative Example 15 | Example carbonaceous material 22 | - | - | 920 |

[Table 11]Continued

| | Discharge capacity [mAh/g] | Irreversible capacity [mAh/g] | Efficiency [%] | Discharge capacity retention rate after 150 cycles [%] |
|---|---|---|---|---|
| Working Example 28 | 446 | 67 | 86.9 | 59.0 |
| Working Example 29 | 451 | 67 | 87.1 | 76.3 |
| Working Example 30 | 435 | 72 | 85.9 | 60.4 |
| Working Example 31 | 449 | 68 | 86.8 | 70.2 |
| Working Example 32 | 450 | 69 | 86.7 | 75.1 |

| | | | | |
|---|---|---|---|---|
| Working Example 33 | 460 | 74 | 86.1 | 75.8 |
| Comparative Example 13 | 464 | 73 | 86.3 | 30.1 |
| Comparative Example 14 | 462 | 72 | 86.5 | 30.3 |
| Comparative Example 15 | 521 | 399 | 56.6 | - |

(Additive abbreviations and LUMO values in the table)

VC: vinylene carbonate (0.0155 eV)
FEC: fluoroethylene carbonate (0.9829 eV)
CIEC: chloroethylene carbonate (0.1056 eV)
PC: propylene carbonate (1.3132 eV)
Electrolytes and LUMO values
EC: ethylene carbonate (1.2417 eV)
DMC: dimethyl carbonate (1.1366 eV)
EMC: ethyl methyl carbonate (1.1301 eV)

Further, this specification discloses:

[1] a carbonaceous material for an anode of a nonaqueous electrolyte secondary battery obtained by carbonizing a plant-derived organic material, the atom ratio (H/C) of hydrogen atoms and carbon atoms according to elemental analysis being at most 0.1, the average particle size $Dv_{50}$ being at least 2 $\mu$m and at most 50 $\mu$m, the average interlayer spacing of the 002 planes determined by X-ray diffraction being at least 0.365 nm and at most 0.400 nm, the potassium element content being at most 0.5 mass%, the calcium element content being at most 0.02 mass%, and the ratio ($\rho_H/\rho_{Bt}$) of the true density ($\rho_{Bt}$) determined by a pycnometer method using butanol and the true density ($\rho_H$) determined by dry density measurement using helium being at least 1.18 and at most 1.38;
[2] the carbonaceous material for an anode of a nonaqueous electrolyte secondary battery according to [2], wherein the plant-derived organic material contains a coffee bean-derived organic material;
[3] a manufacturing method for an intermediate for manufacturing a carbonaceous material for an anode of a nonaqueous electrolyte secondary battery, the method comprising: a step of de-mineral treating a plant-derived organic material using an acidic solution with a pH level of 3.0 or lower; and a step of detarring the de-mineraled organic material;
[4] the method according to [3], wherein the plant-derived organic material contains a coffee bean-derived organic material;
[5] the method according to [3] or [4], further comprising a step of crushing the de-mineraled organic material;
[6] a manufacturing method for a carbonaceous material for an anode of a nonaqueous electrolyte secondary battery, the method comprising: a step of heat treating the intermediate manufactured by the method described in [3] or [4] at a temperature of at least 1000°C and at most 1500°C; and a step of crushing the intermediate or the heat-treated product thereof;
[7] a manufacturing method for a carbonaceous material for an anode of a nonaqueous electrolyte secondary battery, the method comprising a step of heat treating the intermediate manufactured by the method described in [5] at a temperature of at least 1000°C and at most 1500°C;

[8] an anode of a nonaqueous electrolyte secondary battery containing the carbonaceous material for a nonaqueous electrolyte secondary battery described in [1] or [2] or the carbonaceous material for a nonaqueous electrolyte secondary battery manufactured by the method described in [6] or [7];

[9] a nonaqueous electrolyte secondary battery comprising the anode for a nonaqueous electrolyte secondary battery described in [8]; and

[10] a vehicle in which the nonaqueous electrolyte secondary battery described in [9] is mounted.

Further, this specification discloses:

[1] a carbonaceous material for an anode of a nonaqueous electrolyte secondary battery obtained by carbonizing a plant-derived organic material, the potassium content being at most 0.5 mass%, the average particle size $Dv_{50}$ being at least 1 $\mu$m and at most 8 $\mu$m, the average interlayer spacing determined by powder X-ray diffraction being at least 0.365 nm and at most 0.400, and the atom ratio (H/C) of hydrogen atoms and carbon atoms according to elemental analysis being at most 0.1;

[2] the carbonaceous material for an anode of a nonaqueous electrolyte secondary battery according to [1], wherein the calcium content of the carbonaceous material is at most 0.02 mass%;

[3] the carbonaceous material for an anode of a nonaqueous electrolyte secondary battery according to [1] or [2], wherein the true density determined by a butanol method is at least 1.51 $g/cm^3$ and at most 1.65 $g/cm^3$;

[4] the carbonaceous material for an anode of a nonaqueous electrolyte secondary battery according to any one of [1] to [3], wherein the plant-derived organic material contains a coffee bean-derived organic material;

[5] an intermediate for manufacturing a carbonaceous material for an anode of a nonaqueous electrolyte secondary battery obtained by carbonizing a plant-derived organic material, the potassium content being at most 0.5 mass%, and the average particle size $Dv_{50}$ being at least 1 $\mu$m and at most 10 $\mu$m;

[6] the intermediate according to [5], wherein the calcium content of the intermediate is at most 0.02 mass%;

[7] the intermediate according to [5] or [6], wherein the plant-derived organic material contains a coffee bean-derived organic material;

[8] an anode for a nonaqueous electrolyte secondary battery containing the carbonaceous material for an anode of a nonaqueous electrolyte secondary battery described in any one of [1] to [4];

[9] a nonaqueous electrolyte secondary battery comprising the anode of a nonaqueous electrolyte secondary battery described in [8]; and

[10] a vehicle in which the nonaqueous electrolyte secondary battery described in [9] is mounted.

Further, this specification discloses:

[1] an anode for a nonaqueous electrolyte secondary battery containing: a carbonaceous material obtained by carbonizing a plant-derived organic material, the potassium content being at most 0.5 mass%, the average particle size $Dv_{50}$ being at least 2 $\mu$m and at most 50 $\mu$m, the average interlayer spacing determined by powder X-ray diffraction being at least 0.365 nm and at most 0.400 nm, and the atom ratio (H/C) of hydrogen atoms and carbon atoms according to elemental analysis being at most 0.1; and a water-soluble polymer;

[2] the anode for a nonaqueous electrolyte secondary battery according to [1], wherein the calcium content of the carbonaceous material is at most 0.02 mass%;

[3] the anode for a nonaqueous electrolyte secondary battery according to [1] or [2], wherein the true density determined by a butanol method is at least 1.51 $g/cm^3$ and at most 1.65 $g/cm^3$;

[4] the anode for a nonaqueous electrolyte secondary battery according to any one of [1] to [3], wherein the plant-derived organic material contains a coffee bean-derived organic material;

[5] the anode for a nonaqueous electrolyte secondary battery according to any one of [1] to [4], wherein the carbonaceous material has a ratio ($\rho_H/\rho_{Bt}$) of the true density ($\rho_{Bt}$) determined by a pycnometer method using butanol and the true density ($\rho_H$) determined by dry density measurement using helium of at least 1.18 and at most 1.38;

[6] the anode for a nonaqueous electrolyte secondary battery according to any one of [1] to [5], wherein the water-soluble polymer is at least one type selected from carboxymethylcellulose derivatives, polyvinylalcohol derivatives, and polyacrylic acid salts;

[7] the anode for a nonaqueous electrolyte secondary battery according to any one of [1] to [6], wherein the mass average molecular weight of the water-soluble polymer is at least 10,000 and at most 6,000,000;

[8] the anode for a nonaqueous electrolyte secondary battery according to any one of [1] to [7], wherein the water-soluble polymer comprises a polymer containing conjugated diene or an acrylic acid ester as a constituent unit;

[9] a nonaqueous electrolyte secondary battery comprising the anode for a nonaqueous electrolyte secondary battery described in any one of [1] to [8]; and

[10] a vehicle in which the nonaqueous electrolyte secondary battery described in [9] is mounted.

Further, this specification discloses:

[1] a nonaqueous electrolyte secondary battery obtained by carbonizing a plant-derived organic material, the battery comprising an anode containing a carbonaceous material for an anode of a nonaqueous electrolyte secondary battery, the potassium content being at most 0.5 mass%, the average particle size $Dv_{50}$ being at least 2 $\mu$m and at most 50 $\mu$m, the average interlayer spacing of the 002 planes determined by powder X-ray diffraction being at least 0.365 nm and at most 0.400 nm, the atom ratio (H/C) of hydrogen atoms and carbon atoms according to elemental analysis being at most 0.1; and an electrolyte containing an additive in which the LUMO value is at least - 1.10 eV and at most 1.11 eV, the LUMO value being calculated using an AM1 (Austin Model 1) calculation method of a semiemperical molecular orbital method;
[2] the nonaqueous electrolyte secondary battery according to [1], wherein the calcium content of the carbonaceous material is at most 0.02 mass%;
[3] the nonaqueous electrolyte secondary battery according to [1] or [2], wherein the true density determined by a butanol method is at least 1.51 g/cm$^3$ and at most 1.65 g/cm$^3$;
[4] the nonaqueous electrolyte secondary battery according to any one of [1] to [3], wherein the plant-derived organic material contains a coffee bean-derived organic material; and
[5] a vehicle in which the nonaqueous electrolyte secondary battery described in any one of [1] to [4] is mounted.

Further, this specification discloses:

[1] a carbonaceous material for an anode of a nonaqueous electrolyte secondary battery containing the phosphorus element in an amount of at least 0.02 mass% and/or the sulfur element in an amount of at least 0.05 mass%, the atom ratio (H/C) of hydrogen atoms and carbon atoms according to elemental analysis being at most 0.1, the average particle size $Dv_{50}$ being at least 2 $\mu$m and at most 50 $\mu$m, the average interlayer spacing determined by X-ray diffraction being at least 0.365 nm and at most 0.400 nm, potassium element content being at most 0.5 mass%, and the calcium element content being at most 0.02 mass%;
[2] the carbonaceous material for an anode of a nonaqueous electrolyte secondary battery according to [2], wherein the true density determined by a pycnometer method using butanol is at least 1.54 g/cm$^3$;
[3] the carbonaceous material for an anode of a nonaqueous electrolyte secondary battery according to [1] or [2], wherein the magnesium element content is at most 0.1 mass%;
[4] the carbonaceous material for an anode of a nonaqueous electrolyte secondary battery according to any one of [1] to [3], wherein the silicon element content is at most 0.02 mass%;
[5] the carbonaceous material for an anode of a nonaqueous electrolyte secondary battery according to any one of [1] to [4], wherein the specific surface area is at most 13 m$^2$/g;
[6] an anode for a nonaqueous electrolyte secondary battery containing the carbonaceous material of an anode of a nonaqueous electrolyte secondary battery described in any one of [1] to [5];
[7] a nonaqueous electrolyte secondary battery comprising the anode for a nonaqueous electrolyte secondary battery described in [6]; and
[8] a vehicle in which the nonaqueous electrolyte secondary battery described in [7] is mounted.

**Claims**

1. A carbonaceous material for an anode of a nonaqueous electrolyte secondary battery obtained by carbonizing a plant-derived organic material; an atom ratio (H/C) of hydrogen atoms and carbon atoms according to elemental analysis being at most 0.1, an average particle size $Dv_{50}$ being at least 2 $\mu$m and at most 50 $\mu$m, an average interlayer spacing of 002 planes determined by powder X-ray diffraction being at least 0.365 nm and at most 0.400 nm, potassium element content being at most 0.5 mass%, and calcium element content being at most 0.02 mass%.

2. The carbonaceous material for an anode of a nonaqueous electrolyte secondary battery according to claim 1, wherein a ratio ($\rho_H/\rho_{Bt}$) of a true density ($\rho_{Bt}$) determined by a pycnometer method using butanol and a true density ($\rho_H$) determined by dry density measurement using helium is at least 1.18 and at most 1.38.

3. The carbonaceous material for an anode of a nonaqueous electrolyte secondary battery according to claim 1 or 2, wherein the average particle size $Dv_{50}$ is at least 2 $\mu$m and at most 8 $\mu$m.

4.  The carbonaceous material for an anode of a nonaqueous electrolyte secondary battery according to any one of claims 1 to 3, wherein the true density determined by a pycnometer method using butanol is at least 1.51 g/cm$^3$.

5.  The carbonaceous material for an anode of a nonaqueous electrolyte secondary battery according to any one of claims 1 to 4, wherein magnesium element content is at most 0.01 mass%.

6.  The carbonaceous material for an anode of a nonaqueous electrolyte secondary battery according to any one of claims 1 to 5, wherein silicon element content is at most 0.02 mass%.

7.  The carbonaceous material for an anode of a nonaqueous electrolyte secondary battery according to any one of claims 1 to 6, wherein a specific surface area is at most 13 m$^2$/g.

8.  The carbonaceous material for an anode of a nonaqueous electrolyte secondary battery according to any one of claims 1 to 7, wherein the plant-derived organic material contains a coffee bean-derived organic material.

9.  A manufacturing method for an intermediate for manufacturing a carbonaceous material for an anode of a nonaqueous electrolyte secondary battery, the method comprising: a step of de-mineral treating a plant-derived organic material with an average particle size of at least 100 $\mu$m using an acidic solution with a pH level of 3.0 or lower; and a step of detarring the de-mineraled organic material at a temperature of at least 300°C and at most 1000°C.

10. The manufacturing method for an intermediate for manufacturing a carbonaceous material for an anode of a nonaqueous electrolyte secondary battery according to claim 9, wherein the de-mineral treatment step is performed at a temperature of at least 0°C and at most 80°C.

11. The manufacturing method for an intermediate for manufacturing a carbonaceous material for an anode of a nonaqueous electrolyte secondary battery according to claim 9 or 10, wherein the detarring step is performed under a combustible gas environment at a temperature of at least 300°C and at most 800°C.

12. The manufacturing method for an intermediate for manufacturing a carbonaceous material for an anode of a nonaqueous electrolyte secondary battery according to any one of claims 9 to 11, wherein the plant-derived organic material is not subjected to heat treatment at a temperature of 500°C or higher.

13. The manufacturing method for an intermediate for manufacturing a carbonaceous material for an anode of a nonaqueous electrolyte secondary battery according to any one of claims 9 to 12, wherein the plant-derived organic material contains a coffee bean-derived organic material.

14. The manufacturing method for an intermediate for manufacturing a carbonaceous material for an anode of a nonaqueous electrolyte secondary battery according to any one of claims 9 to 13, further comprising a step of crushing the de-mineraled organic material.

15. An intermediate obtained by the method described in any one of claims 9 to 14.

16. A manufacturing method for a carbonaceous material for an anode of a nonaqueous electrolyte secondary battery, the method comprising: a step of heat treating an intermediate manufactured by the method described in any one of claims 9 to 13 at a temperature of at least 1000°C and at most 1500°C; and a step of crushing the intermediate or the calcined product thereof.

17. A manufacturing method for a carbonaceous material for an anode of a nonaqueous electrolyte secondary battery, the method comprising a step of heat treating an intermediate manufactured by the method described in claim 14 at a temperature of at least 1000°C and at most 1500°C.

18. A carbonaceous material for an anode of a nonaqueous electrolyte secondary battery obtained by the manufacturing method described in claim 16 or 17.

19. An anode for a nonaqueous electrolyte secondary battery containing the carbonaceous material for an anode of a nonaqueous electrolyte secondary battery described in any one of claims 1 to 8 and claim 18.

20. The anode for a nonaqueous electrolyte secondary battery according to claim 19 containing a water-soluble polymer.

**21.** The anode for a nonaqueous electrolyte secondary battery according to claim 20, wherein the water-soluble polymer is a polymer containing conjugated diene or an acrylic acid ester as a constituent unit.

**22.** The anode for a nonaqueous electrolyte secondary battery according to claim 20 or 21, wherein the water-soluble polymer is at least one type selected from carboxymethylcellulose derivatives, polyvinylalcohol derivatives, and polyacrylic acid salts.

**23.** The anode for a nonaqueous electrolyte secondary battery according to any one of claims 20 to 22, wherein a mass average molecular weight of the water-soluble polymer is at least 10,000 and at most 6,000,000.

**24.** A nonaqueous electrolyte secondary battery comprising the anode for a nonaqueous electrolyte secondary battery described in any one of claims 19 to 23.

**25.** The nonaqueous electrolyte secondary battery according to claim 24 containing an additive having a LUMO value within a range of from at least -1.10 eV to at most 1.11 eV, the LUMO value being calculated using an AM1 (Austin Model 1) calculation method of a semiemperical molecular orbital method.

**26.** The nonaqueous electrolyte secondary battery according to claim 25, wherein the additive is one or more additives selected from the group consisting of fluoroethylene carbonate, trimethylsilyl phosphoric acid, lithium tetrafluoroborate, chloroethylene carbonate, propanesultone, ethylene sulfite, vinylene carbonate, vinyl ethylene carbonate, dioxathiolane dioxide, and lithium bis(oxalato)borate.

**27.** A vehicle in which the nonaqueous electrolyte secondary battery described in any one of claims 24 to 26 is mounted.

## INTERNATIONAL SEARCH REPORT

| International application No. |
| --- |
| PCT/JP2013/073425 |

A. CLASSIFICATION OF SUBJECT MATTER
*H01M4/587*(2010.01)i, *C01B31/02*(2006.01)i, *H01M4/62*(2006.01)i, *H01M10/0525*(2010.01)i, *H01M10/0567*(2010.01)i

According to International Patent Classification (IPC) or to both national classification and IPC

B. FIELDS SEARCHED

Minimum documentation searched (classification system followed by classification symbols)
H01M4/587, C01B31/02, H01M4/62, H01M10/0525, H01M10/0567

Documentation searched other than minimum documentation to the extent that such documents are included in the fields searched
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | WO 2011/157013 A1 (BTR New Energy Materials Inc.),<br>22 December 2011 (22.12.2011),<br>[24], [64], [72] to [73], [85] to [98]; examples 14 to 21<br>& CN 101887966 A          & KR 10-2013-0030769 A<br>& JP 2013-534024 A | 1-19,27<br>20-26 |
| X<br>Y | JP 2006-114507 A (Sony Corp.),<br>27 April 2006 (27.04.2006),<br>paragraphs [0045], [0050], [0065]; examples E6, E8<br>& US 5834138 A          & EP 758801 A1<br>& WO 1996/027911 A1    & DE 69630741 D<br>& CA 2189258 A | 1,5,6,19,27<br>20-26 |

[×] Further documents are listed in the continuation of Box C.   [ ] See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered  to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 20 November, 2013 (20.11.13) | 03 December, 2013 (03.12.13) |

| Name and mailing address of the ISA/<br>Japanese Patent Office | Authorized officer |
| --- | --- |
| Facsimile No. | Telephone No. |

Form PCT/ISA/210 (second sheet) (July 2009)

EP 2 894 702 A1

## INTERNATIONAL SEARCH REPORT

| International application No. |
| --- |
| PCT/JP2013/073425 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 07-230803 A  (Nippon Sanso Corp.),<br>29 August 1995 (29.08.1995),<br>example 3<br>(Family: none) | 9-12,14,15 |
| Y | JP 08-064207 A  (Kureha Chemical Industry Co.,<br>Ltd.),<br>08 March 1996 (08.03.1996),<br>paragraphs [0044] to [0045], [0066]<br>& US 5616436 A          & EP 700105 A2<br>& DE 69530344 D          & KR 10-0152160 B<br>& CA 2156676 A1 | 9-12,14,15 |
| Y | JP 2000-182670 A  (Alcatel),<br>30 June 2000 (30.06.2000),<br>paragraphs [0055] to [0056]<br>& US 2001/0019800 A1     & EP 1009057 A1<br>& FR 2787243 A | 20-26 |
| Y | JP 2009-238681 A  (Nissan Motor Co., Ltd.),<br>15 October 2009 (15.10.2009),<br>paragraphs [0004], [0010] to [0017]<br>(Family: none) | 20-26 |
| A | JP 2000-268823 A  (Sony Corp.),<br>29 September 2000 (29.09.2000),<br>entire text<br>(Family: none) | 1-27 |
| A | JP 08-115723 A  (Kureha Chemical Industry Co.,<br>Ltd.),<br>07 May 1996 (07.05.1996),<br>entire text<br>& US 5741472 A          & EP 700106 A2<br>& KR 10-0169170 B        & CA 2156675 A1 | 1-8 |
| A | WO 2010/035828 A1  (Morita Tech Co., Ltd.),<br>01 April 2010 (01.04.2010),<br>entire text<br>& US 2011/0180749 A1     & EP 2343759 A1<br>& CN 102165632 A         & KR 10-2011-0054030 A<br>& TW 201025707 A | 1-8 |
| A | JP 10-284089 A  (Sony Corp.),<br>23 October 1998 (23.10.1998),<br>entire text<br>& US 6335122 B1          & EP 972313 A<br>& WO 1998/044580 A1      & TW 458943 B<br>& CA 2285275 A | 1-27 |

Form PCT/ISA/210 (continuation of second sheet) (July 2009)

48

**INTERNATIONAL SEARCH REPORT**

International application No.

PCT/JP2013/073425

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-021919 A (Kureha Chemical Industry Co., Ltd.), 23 January 1998 (23.01.1998), entire text & US 6303249 B1 & EP 817295 A2 & DE 69717550 D & KR 10-0264400 B & CA 2207462 A1 | 1-27 |
| A | JP 2012-160456 A (Sony Corp.), 23 August 2012 (23.08.2012), entire text & US 2010/0069507 A1 & EP 2060535 A1 & WO 2008/123606 A1 & CA 2659765 A & KR 10-2010-0014074 A & RU 2008147726 A & BRA PI0803095 | 1-27 |

Form PCT/ISA/210 (continuation of second sheet) (July 2009)

**REFERENCES CITED IN THE DESCRIPTION**

**Patent documents cited in the description**

- JP H08064207 A
- JP H09161801 A
- JP H1021919 A
- JP 2000268823 A
- JP 2001223030 A
- JP 2005317469 A
- JP 2007134286 A